# EUROPEAN PATENT APPLICATION

(11) **EP 3 373 441 A1**
(43) Date of publication of application: **12.09.2018**
(21) Application number: 16862403.9
(22) Date of filing: 02.11.2016
(51) Int. Cl.: H02N 11/00, H02K 99/00, H02K 53/00

(54) **POWER GENERATION APPARATUS**

(30) Priority: 03.11.2015 KR 20150153817
(71) Applicant: Suk, Se Myung, Ansan-si, Gyeonggi-do 15447 (KR); Suk, Young Jun, Ansan-si, Gyeonggi-do 15447 (KR)
(72) Inventor: SUK, Se Myung, Ansan-si Gyeonggi-do 15447 (KR); SUK, Song Gon, Las Vegas, Nevada 89135-1416 (US); CHANG, Moon Hwa, Seoul 06090 (KR)
(74) Representative: Zeitler Volpert Kandlbinder Patent- und Rechtsanwälte Partnerschaft mbB
(86) International application number: PCT/KR2016/012498
(87) International publication number: WO 2017/078387

(57) **Abstract**

Provided is a power generation apparatus. The power generation apparatus comprises: a rotating body including a first part, a second part placed at one side of the first part and having a first dent portion, and a third part placed at the other side of the first part and having a second dent portion; a supporting body opposite to the first part; a first non-rotating body opposite to the second part and having a first protruding portion protruded toward the first dent portion; a second non-rotating body opposite to the third part and having a second protruding portion protruded toward the second dent portion; a plurality of first magnet units installed on the first protruding portion and having a first polarity; a plurality of second magnet units installed on the first dent portion and having the first polarity; a plurality of third magnet units installed on the second dent portion and having a second polarity; a plurality of fourth magnet units installed on the second protruding portion and having the second polarity; a plurality of fifth magnet units installed on the first part and having the second polarity; a plurality of sixth magnet units installed on the supporting body and having the first polarity; and a plurality of conductor units placed between the first part and the supporting body and in which induced current is generated.

## Description

### [Technical Field]

The present disclosure relates to a power generation apparatus using a permanent magnet.

### [Background Art]

In a driving source (i.e., a driving motor) of a conventional generator, driving capacity and a rotational speed are determined according to conditions of each manufacturer. Therefore, in order to generate a rated output of a generator, an output of a driving motor should be about three times an output of a motor generator. Therefore, the total efficiency of power generation is reduced and energy is severely wasted.

### [Disclosure]

### [Technical Problem]

The present disclosure is directed to providing a power generation apparatus capable of achieving high energy efficiency.

It should be noted that objects of the present disclosure are not limited to the above-described objects, and other objects of the present disclosure will be apparent to those skilled in the art from the following descriptions.

### [Technical Solution]

One aspect of the present disclosure provides a power generation apparatus including a rotor including a first portion, a second portion arranged at one side of the first portion and having a first dent portion, and a third portion arranged at the other side of the first portion and having a second dent portion, a supporter configured to face the first portion, a first non-rotor configured to face the second portion and including a first protrusion configured to protrude toward the first dent portion, a second non-rotor configured to face the third portion and including a second protrusion configured to protrude toward the second dent portion, a plurality of first magnet units provided on the first protrusion and having a first polarity, a plurality of second magnet units provided on the first dent portion and having the first polarity, a plurality of third magnet units provided on the second dent portion and having a second polarity, a plurality of fourth magnet units provided on the second protrusion and having the second polarity, a plurality of fifth magnet units provided on the first portion and having the second polarity, a plurality of sixth magnet units provided on the supporter and having the first polarity, and a plurality of conductor units arranged between the first portion and the supporter and in which an induced current is generated.

The first magnet units to the fourth magnet units may have unbalanced magnetic force vector waves and the fifth magnet units and the sixth magnet units may have balanced magnetic force vector waves.

Shapes of the fifth magnet units may be different from shapes of the sixth magnet units.

The fifth magnet units may be trapezoidal and the sixth magnet units may be rectangular.

The power generation apparatus may further include a plurality of seventh magnet units provided on the first portion and having the first polarity.

The seventh magnet units may have a trapezoidal shape, the fifth magnet units, the sixth magnet units, and the seventh magnet units may have balanced magnetic force vector waves, and the fifth magnet units and the seventh magnet units may be alternately arranged.

A groove may be formed in the first portion and a plurality of fifth magnet units may be arranged in the groove.

The groove may be formed in the supporter, the plurality of sixth magnet units may be arranged in the groove, and the plurality of conductor units may be fixed to the supporter.

The rotor may be connected to a shaft, the first dent portion may include a first region and a second region, wherein the first region may be closer to the shaft than the second region and a depth of the first region may be greater than the depth of the second region, and the second dent portion may include a third region and a fourth region, wherein the third region may be closer to the shaft than the fourth region and a depth of the third region may be greater than the depth of the fourth region.

The shaft may pass through the first non-rotor and the second non-rotor, the first protrusion may include a fifth region and a sixth region, wherein the fifth region may be closer to the shaft than the sixth region and a height of the fifth region may be greater than the height of the sixth region, and the second protrusion may include a seventh region and an eighth region, wherein the seventh region may be closer to the shaft than the eighth region and the height of the seventh region may be greater than the height of the eighth region.

The plurality of first magnet units may be arranged to form a first column and a second column about a shaft, the plurality of second magnet units may be arranged to form a third column and a fourth column about the shaft, at least a portion of the first column and at least a portion of the third column may face each other, and at least a portion of the second column and at least a portion of the fourth column may face each other.

A distance from the shaft to the first column and a distance from the shaft to the third column may be different from each other.

The number of the plurality of first magnet units forming the second column and the number of the plurality of second magnet units forming the fourth column may be different from each other.

The number of the plurality of first magnet units forming the first column and the number of the plurality of second magnet units forming the third column may be equal to each other.

The plurality of first magnet units may be arranged to form the first column, the second column, and the fifth column about the shaft, and arranged in an order of the first column, the second column, and the fifth column, the plurality of second magnet units may be arranged to form the third column, the fourth column, and the sixth column about the shaft, and arranged in an order of the third column, the fourth column, and the sixth column, at least a portion of the fifth column and at least a portion of the sixth column may face each other, and the number of the plurality of first magnet units forming the fifth column and the number of the plurality of second magnet units forming the sixth column may be different from each other.

The number of the plurality of first magnet units forming the second column may be smaller than the number of the plurality of second magnet units forming the fourth column, and the number of the plurality of first magnet units forming the fifth column may be greater than the number of the plurality of second magnet units forming the sixth column.

The numbers of the plurality of second magnet units forming the third column, the fourth column, and the sixth column may not be equal to each other, and may have a greatest common divisor of 2 or higher.

Another aspect of the present disclosure provides a power generation apparatus including a rotor including a first portion, a second portion arranged at one side of the first portion, and a third portion arranged at the other side of the first portion, a supporter configured to face the first portion, a first non-rotor configured to face the second portion, a plurality of first magnet units provided on the first non-rotor, a plurality of second magnet units provided on the second portion, a plurality of fifth magnet units provided on the first portion, a plurality of sixth magnet units provided on the supporter, and a plurality of conductor units arranged between the first portion and the supporter and in which an induced current is generated, wherein a repulsive force is generated between the first magnet units and the second magnet units and an attractive force is generated between the fifth magnet units and the sixth magnet units, the first magnet units and the second magnet units have unbalanced magnetic force vector waves, central axes and magnetic field axes of the first magnet units have a phase difference, central axes and magnetic field axes of the second magnet units have a phase difference, and the fifth magnet units and the sixth magnet units have balanced magnetic force vector waves.

Still another aspect of the present disclosure provides a power generation apparatus including a rotor connected to a shaft, a first non-rotor configured to face one surface of the rotor, a plurality of first magnet units provided on the rotor and having a first polarity, and a plurality of second magnet units provided on the first non-rotor and having the first polarity, wherein the plurality of first magnet units are arranged to form a first column, a second column, and a fifth column about the shaft, and arranged in an order of the first column, the second column, and the fifth column, the plurality of second magnet units are arranged to form a third column, a fourth column, and a sixth column about the shaft, and arranged in an order of the third column, the fourth column, and the sixth column, at least a portion of the first column and at least a portion of the third column face each other, at least a portion of the second column and at least a portion of the fourth column face each other, at least a portion of the fifth column and at least a portion of the sixth column face each other, each of the first magnet units and the second magnet units has an unbalanced magnetic force vector wave, central axes and magnetic field axes of the first magnet units have a phase difference, central axes and magnetic field axes of the second magnet units have a phase difference, and the numbers of the plurality of second magnet units forming the third column, the fourth column, and the sixth column are not equal to each other, and have a greatest common divisor of 2 or higher.

Yet another aspect of the present disclosure provides a power generation apparatus including a rotor connected to a shaft, a first non-rotor configured to face one surface of the rotor, a plurality of first magnet units provided on the rotor and having a first polarity, and a plurality of second magnet units provided on the first non-rotor and having the first polarity, wherein the plurality of first magnet units are arranged to form a first column, a second column, and a fifth column about the shaft, the plurality of second magnet units are arranged to form a third column, a fourth column, and a sixth column about the shaft, at least a portion of the first column and at least a portion of the third column face each other, at least a portion of the second column and at least a portion of the fourth column face each other, at least a portion of the fifth column and at least a portion of the sixth column face each other, each of the first magnet units and the second magnet units has an unbalanced magnetic force vector wave, central axes and magnetic field axes of the first magnet units have a phase difference, central axes and magnetic field axes of the second magnet units have a phase difference, the number of the plurality of first magnet units forming the first column and the number of the plurality of second magnet units forming the third column are equal to each other, the number of the plurality of first magnet units forming the second column is smaller than the number of the plurality of second magnet units forming the fourth column, and the number of the plurality of first magnet units forming the fifth column is greater than the number of the plurality of second magnet units forming the sixth column.

Other specific details of the present disclosure are included in the detailed description and the drawings.

### [Description of Drawings]

FIG. 1 is a cross-sectional view for describing a power generation apparatus according to some embodiments of the present disclosure.
FIG. 2 is a view for describing a shape of a rotor of FIG. 1.
FIG. 3 is a view for describing a first non-rotor of FIG. 1, which is a view for describing a surface facing a second portion of the rotor.
FIG. 4 is a conceptual view for describing a relationship between a plurality of first magnet units provided on the first non-rotor of FIG. 3.
FIGS. 5A, 5B, and 6 are conceptual views for describing a magnetic field of the first magnet units provided on the first non-rotor of FIG. 3.
FIG. 7 is a view for describing the second portion of the rotor of FIG. 1.
FIG. 8 is a conceptual view for describing a relationship between a plurality of second magnet units provided on the rotor of FIG. 7.
FIG. 9 is a schematic view for describing a relationship between a fifth magnet unit, a sixth magnet unit, and a conductor unit.
FIG. 10 is a view showing a plurality of fifth magnet units provided on a first portion of the rotor.
FIG. 11 is a view showing a plurality of sixth magnet units provided on a supporter.
FIGS. 12A and 12B are conceptual views for describing a magnetic field of the fifth magnet units.
FIGS. 13 to 15 are conceptual views for describing an arrangement of the fifth magnet units and/or an arrangement of seventh magnet units.
FIG. 16 is a view for describing a magnetic field tornado and a magnetic field cyclone.
FIG. 17 is a view for describing a method of driving (magnetic field surfing) a power generation apparatus according to some embodiments of the present disclosure.
FIG. 18 is a view for describing a power generation apparatus according to another embodiment of the present disclosure.
FIG. 19 is a view for describing a power generation apparatus according to still another embodiment of the present disclosure, which is a view for describing a first non-rotor.
FIG. 20 is a conceptual view for describing a relationship between a plurality of first magnet units provided on the first non-rotor of FIG. 19.
FIG. 21 is a view for describing a power generation apparatus according to yet another embodiment of the present disclosure, which is a view for describing a rotor.
FIG. 22 is a conceptual view for describing a relationship between a plurality of second magnet units provided on a non-rotor of FIG. 21.
FIGS. 23 and 24 are a perspective view and a side view, respectively, of the power generation apparatuses according to yet another embodiment of the present disclosure.
FIG. 25 is a cross-sectional view taken along line A-A of FIG. 24.
FIGS. 26 to 28 are views for describing shapes of magnetic units that may be applied to a driving system according to some embodiments of the present disclosure.

### [Modes of the Invention]

Advantages and features of the present disclosure and methods of achieving the same will be clearly understood with reference to the accompanying drawings and embodiments described in detail below. However, the present disclosure is not limited to the embodiments to be disclosed below, but may be implemented in various different forms. The embodiments are provided in order to fully explain the present embodiments and fully explain the scope of the present embodiments for those skilled in the art. The scope of the present embodiments is only defined by the appended claims. Like reference numerals refer to like elements throughout the specification.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements. Like reference numerals refer to like elements throughout the specification. As used herein, the term "and/or" includes any and all combinations of one or more of the associated listed items.

It should be understood that, although the terms "first," "second," etc. may be used herein to describe various elements, components, and/or sections, these elements, components, and/or sections are not limited by these terms. The terms are only used to distinguish one element, component, or section from another element, component, or section. Therefore, it should be understood that a first element, a first component, or a first section to be described below may be a second element, a second component, or a second section within the technical scope of the present disclosure.

Meanwhile, the terms used herein are provided to only describe embodiments of the present disclosure and not for purposes of limitation. Unless the context clearly indicates otherwise, the singular forms include the plural forms. It will be understood that the terms "comprise" or "comprising" when used herein, specify some stated components, steps, operations and/or elements, but do not preclude the presence or addition of one or more other components, steps, operations and/or elements.

Unless otherwise defined, all terms (including technical and scientific terms) used herein can be used as is customary in the art to which the present disclosure belongs. Also, it will be further understood that terms, such as those defined in commonly used dictionaries, will not be interpreted in an idealized or overly formal sense unless expressly so defined herein.

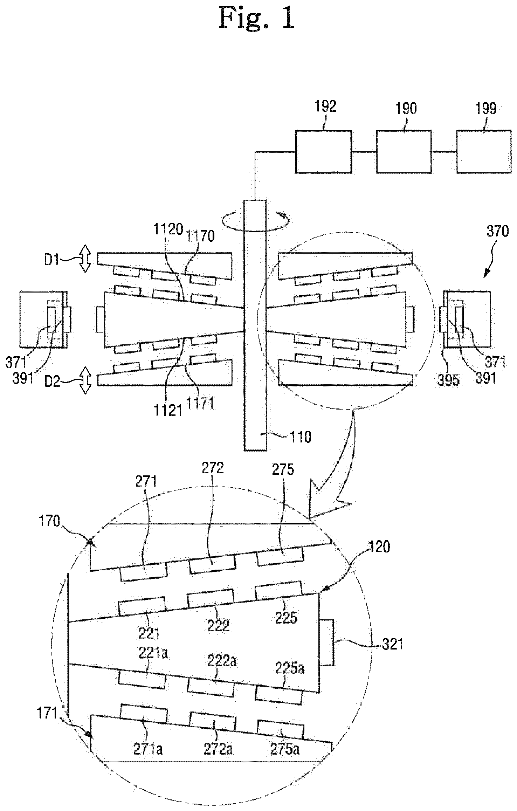

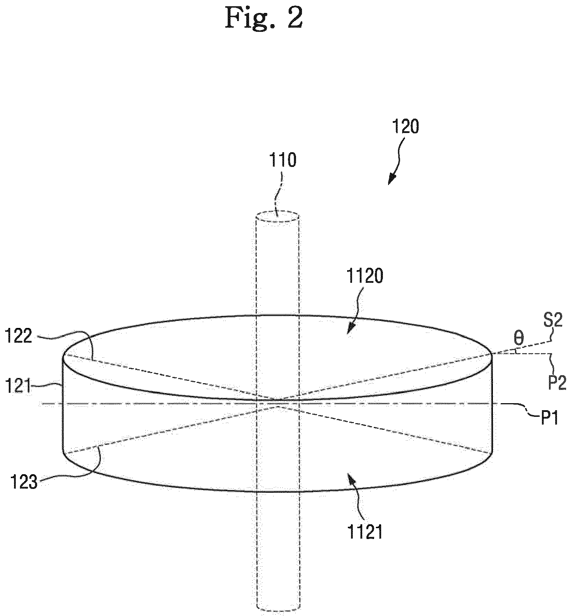

FIG. 1 is a cross-sectional view for describing a power generation apparatus according to some embodiments of the present disclosure. FIG. 2 is a view for describing a shape of a rotor of FIG. 1.

First, referring to FIG. 1, the power generation apparatus according to some embodiments of the present disclosure includes a shaft 110, a rotor 120, a supporter 370, a first non-rotor 170, a second non-rotor 171, a plurality of first magnet units 271, 272, and 275, a plurality of second magnet units 221, 222, and 225, a plurality of third magnet units 221a, 222a, and 225a, a plurality of fourth magnet units 271a, 272a, and 275a, a plurality of fifth magnet units 321, a plurality of sixth magnet units 371, a plurality of conductor units 391, a power supply 190, a motor 192, a controller 199, and the like.

The shaft 110 may be formed to pass through the first non-rotor 170, the second non-rotor 171, and the rotor 120. The rotor 120 is connected to the shaft 110 so that the rotor 120 may rotate along with the shaft 110 according to the rotation of the shaft 110. For example, the power supply 190 may supply power to the motor 192, and the rotor 120 may be rotated by the motor 192. The first non-rotor 170 and the second non-rotor 171 do not rotate regardless of the rotation of the shaft 110. Therefore, unlike in the drawings, the shaft 110 may pass through only the rotor 120, and may not pass through the first non-rotor 170 and the second non-rotor 171.

Further, the first non-rotor 170 and the second non-rotor 171 may be arranged at both sides of (i.e., above and below) the rotor 120. In FIG. 1, one rotor 120 and two non-rotors 170 and 171 are shown as an example, but the present disclosure is not limited thereto.

The rotor 120 includes a first portion 121, a second portion 122, and a third portion 123, as shown in FIG. 2. The second portion 122 may be formed at one side of the first portion 121, and the third portion 123 may be formed at the other side of the first portion 121. For example, the first portion 121 may be a side surface, the second portion 122 may be an upper surface, and the third portion 123 may be a lower surface.

Meanwhile, a first dent portion 1120 may be formed in the second portion 122, and the second dent portion 1121 may be formed in the third portion 123. As shown in the drawing, the first dent portion 1120 may be formed on an entire surface of the second portion 122 or on a portion of the surface of the second portion 122. The second dent portion 1121 may be formed on the entire surface of the third portion 123 or on a portion of the surface of the third portion 123.

Further, the first dent portion 1120 may have a shape in which a depth thereof increases toward the shaft 110. The first dent portion 1120 may have an inclined shape. An angle formed by a surface S2 of the first dent portion 1120 and a virtual plane P2 of the second portion 122 may compose an acute angle θ. Here, the virtual plane P2 of the second portion 122 may be parallel to a central plane P1 of the rotor 120. In other words, the first dent portion 1120 may include a first region and a second region, wherein the first region may be closer to the shaft 110 than the second region and the depth of the first region may be greater than the depth of the second region.

The second dent portion 1121 may also have a shape in which the depth thereof increases toward the shaft 110. The second dent portion 1121 may have an inclined shape. Alternatively, the second dent portion 1121 may include a third region and a fourth region, wherein the third region may be closer to the shaft 110 than the fourth region and the depth of the third region may be greater than the depth of the fourth region.

Meanwhile, the first portion 121 may have a cylindrical shape as shown, or may have a polygonal prism shape unlike that shown.

Referring again to FIG. 1, the supporter 370 is arranged to face the first portion 121. The supporter 370 may be arranged to surround at least a portion of the first portion 121.

Further, the first non-rotor 170 is formed to face the second portion 122. The first non-rotor 170 may have a truncated conical shape. The first non-rotor 170 includes a first protrusion 1170 protruding toward the first dent portion 1120 (or the second portion 122). The first protrusion 1170 may be formed on the entire surface of the first non-rotor 170 or on a portion of the surface of the first non-rotor 170. The first protrusion 1170 may have a shape in which a height thereof increases toward the shaft 110. The first protrusion 1170 may include a fifth region and a sixth region, wherein the fifth region may be closer to the shaft 110 than the sixth region and the height of the fifth region may be greater than the height of the sixth region.

The second non-rotor 171 is formed to face the third portion 123. The second non-rotor 171 may have a truncated conical shape. The second non-rotor 171 includes a second protrusion 1171 protruding toward the second dent portion 1121 (or the third portion 123). The second protrusion 1171 may be formed on the entire surface of the second non-rotor 171 or on a portion of the surface of the second non-rotor 171. The second protrusion 1171 may have a shape in which the height thereof increases toward the shaft 110. The second protrusion 1171 may include a seventh region and a eighth region, wherein the seventh region may be closer to the shaft 110 than the eighth region and the height of the seventh region may be greater than the height of the eighth region.

Alternatively, the first non-rotor 170 or the second non-rotor 171 may have a truncated polygonal pyramid shape unlike that shown.

Further, the plurality of first magnet units 271, 272, and 275 are arranged on the first non-rotor 170 (i.e., the first protrusion 1170). The plurality of first magnet units 271, 272, and 275 may form a plurality of columns (e.g., three columns) about the shaft 110. The first magnet units 271, 272, and 275 have a first polarity (e.g., an N pole).

The plurality of second magnet units 221, 222, and 225 are arranged on the rotor 120 (i.e., the second portion 122 or the first dent portion 1120). The plurality of second magnet units 221, 222, and 225 may form a plurality of columns (e.g., three columns) about the shaft 110. The second magnet units 221, 222, and 225 have the first polarity (e.g., the N pole).

The plurality of third magnet units 221a, 222a, and 225a are arranged on the rotor 120 (i.e., the third portion 123 or the second dent portion 1121). The plurality of third magnet units 221a, 222a, and 225a may form a plurality of columns (e.g., three columns) about the shaft 110. The third magnet units 221a, 222a, and 225a have a second polarity (e.g., an S pole).

The plurality of fourth magnet units 271a, 272a, and 275a are arranged on the second non-rotor 171 (i.e., the second protrusion 1171). The plurality of fourth magnet units 271a, 272a, and 275a may form a plurality of columns (e.g., three columns) about the shaft 110. The fourth magnet units 271a, 272a, and 275a have the second polarity (e.g., the S pole).

A repulsive force is generated between the plurality of first magnet units 271, 272, and 275 and the plurality of second magnet units 221, 222, and 225, and a repulsive force is generated between the plurality of third magnet units 221a, 222a, and 225a and the plurality of fourth magnet units 271a, 272a, and 275a.

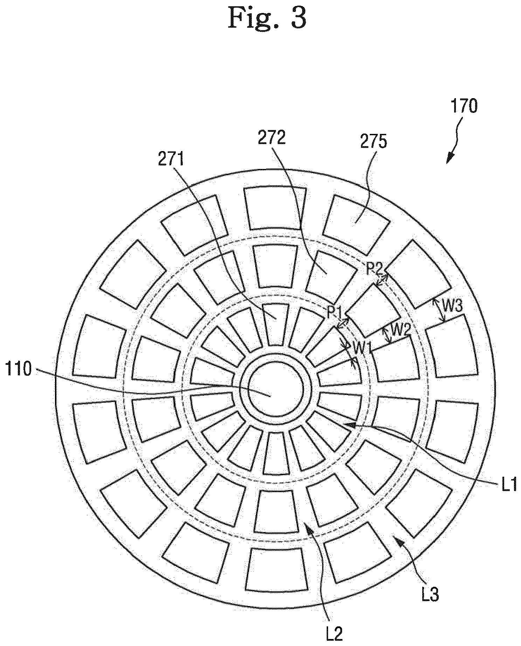

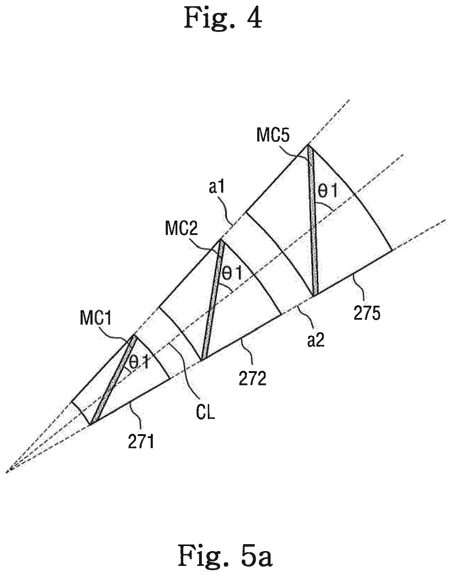

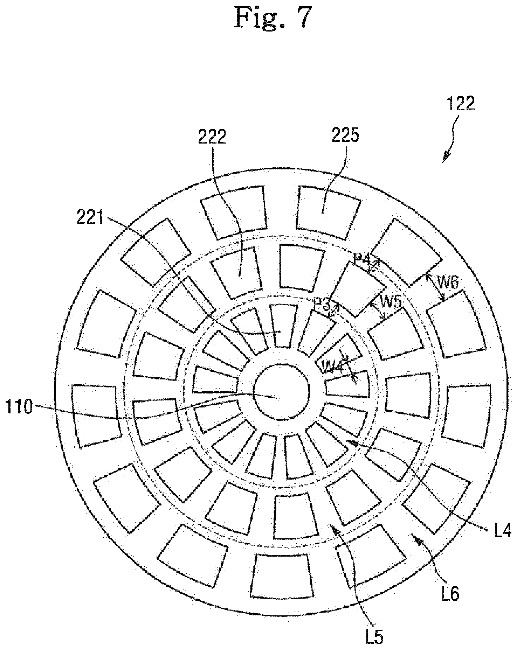

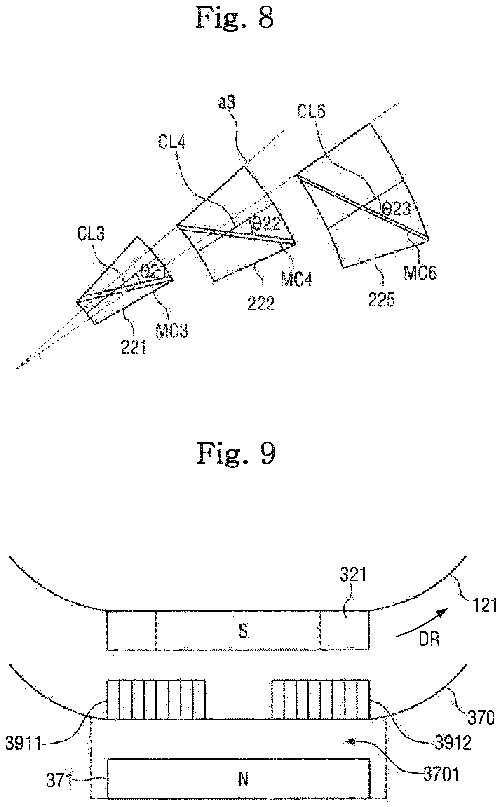

An example of an arrangement of the plurality of first magnet units 271, 272, and 275 and the plurality of fourth magnet units 271a, 272a, and 275a will be described below with reference to FIGS. 3 and 4. An example of an arrangement of the plurality of second magnet units 221, 222, and 225 and the plurality of third magnet units 221a, 222a, and 225a will be described below with reference to FIGS. 7 and 8.

The plurality of fifth magnet units 321 are provided on the first portion 121. The fifth magnet units 321 may form one column or a plurality of columns. The fifth magnet units 321 may have the second polarity (e.g., the S pole). The plurality of fifth magnet units 321 may be provided on a surface of the first portion 121. Alternatively, a groove may be formed in the first portion 121 and the plurality of fifth magnet units 321 may be arranged in the groove.

The plurality of sixth magnet units 371 is provided on the supporter 370. The sixth magnet units 371 may form one column or a plurality of columns. The sixth magnet units 371 may have the first polarity (e.g., the N pole). A groove may be formed in the supporter 370 and the plurality of sixth magnet units 371 may be arranged in the groove. Alternatively, the plurality of sixth magnet units 371 may be arranged on a surface of the supporter 370.

At least some of the plurality of fifth magnet units 321 and at least some of the plurality of sixth magnet units 371 may face each other. An attractive force is generated between the plurality of fifth magnet units 321 and the plurality of sixth magnet units 371.

The plurality of conductor units 391 are arranged between the first portion 121 and the supporter 370. Particularly, the plurality of conductor units 391 may be arranged between the plurality of fifth magnet units 321 and the plurality of sixth magnet units 371. The conductor units 391 may include any material as long as it is a conductive material such as copper, aluminum, gold, silver, indium tin oxide (ITO), indium zinc oxide (IZO), or the like. Alternatively, the conductor units 391 may be, for example, in the form of a wire wound around a metal.

As the rotor 120 rotates, the plurality of fifth magnet units 321 also rotate, the plurality of conductor units 391 are arranged in the attractive force generated by the plurality of fifth magnet units 321 and the plurality of sixth magnet units 371, and thus an induced current may be generated in the plurality of conductor units 391. The plurality of conductor units 391 may be supported by or fixed to, for example, the supporter 370.

An example of an arrangement of the plurality of fifth magnet units 321, the plurality of sixth magnet units 371, and the plurality of conductor units 391 will be described below with reference to FIGS. 9 to 15.

Meanwhile, the first non-rotor 170 or the second non-rotor 171 is movable in an extending direction of the shaft 110 (see reference symbols D1 and D2). The first non-rotor 170 or the second non-rotor 171 may be moved using an actuator using, for example, electricity, hydraulic pressure, compressed air, or the like, or may be moved using a mechanical method using a gear or the like. The first non-rotor 170 or the second non-rotor 171 may be moved using any method as long as it may be moved using the method.

Particularly, a magnitude of the repulsive force generated between the plurality of first magnet units 271, 272, and 275 and the plurality of second magnet units 221, 222, and 225 may be adjusted by adjusting an interval between the first non-rotor 170 and the second portion 122. As mentioned above, the magnitude of the repulsive force generated between the plurality of third magnet units 221a, 222a, and 225a and the plurality of fourth magnet units 271a, 272a, and 275a may be adjusted by adjusting an interval between the second non-rotor 171 and the third portion 123.

The interval between the first non-rotor 170 and the second portion 122 and the interval between the second non-rotor 171 and the third portion 123 may be controlled to be the same or may be controlled to be different. A speed of the rotor 120 may be controlled to be set to a required value by a combination of the interval between the first non-rotor 170 and the second portion 122 and the interval between the second non-rotor 171 and the third portion 123.

Meanwhile, in the power generation apparatus according to some embodiments of the present disclosure, the first magnet units 271, 272, and 275, the second magnet units 221, 222, and 225, and the sixth magnet units 371 are described as having the first polarity (e.g., the N polarity), and the third magnet units 221a, 222a, and 225a, the fourth magnet units 271a, 272a, and 275a, and the fifth magnet units 321 are described as having the second polarity (e.g., the S polarity), but the present disclosure is not limited thereto. That is, the present disclosure is not limited to the polarity thereof as long as the repulsive force can be generated between the second portion 122 and the first non-rotor 170 (i.e., between the first magnet units 271, 272, and 275 and the second magnet units 221, 222, and 225) and a repulsive force can be generated between the third portion 123 and the second non-rotor 171 (i.e., between the third magnet units 221a, 222a, and 225a and the fourth magnet units 271a, 272a, and 275a). As mentioned above, the present disclosure is not limited to the polarity thereof as long as an attractive force can be generated between the fifth magnet units 321 and the sixth magnet units 371.

Although not shown separately, a magnetic shield is provided inside and/or outside the power generation apparatus and serves to shield a magnetic force generated inside the power generation apparatus from affecting the outside.

Meanwhile, the power supply 190 is electrically connected to the shaft 110. Further, the controller 199 for controlling the power supply 190 is connected to the shaft 110. For example, the power supply 190 supplies power to the motor 192, the shaft 110 rotates according to the rotation of the motor 192, and the rotor 120 rotates according to the rotation of the shaft 110. The power supply 190 may be a battery, but the present disclosure is not limited thereto. By using the battery, the power generation apparatus may be easily moved and provided and may be easily used at anyplace. Further, as will be described below, since the battery is not used much, it may be used for a long time even with a battery having small capacity.

Meanwhile, in the power generation apparatus according to some embodiments of the present disclosure, the power supply 190 supplies power to the motor 192, and the motor 192 supplies power to the rotor 120 while a period in which the rotor 120 rotates at a preset rotational speed, or for a preset time, for example, of 1,000 to 3,000 times. When the rotor 120 rotates at the preset rotational speed (after the rotor 120 rotates for the preset time), additional power may not be supplied to the rotor 120 for a predetermined time. A "preset interval" in which no power is supplied may be a fixed time, and may be a time varying according to the rotational speed of the rotor 120. During a period in which no additional power is supplied, the rotor 120 may continuously rotate using a magnetic field surfing operation. That is, the rotor 120 may rotate for a long time by magnetic field surfing (in comparison of the rotor which does not use magnetic field surfing). The period during which no power is supplied may be prolonged.

The magnetic field surfing is a concept similar to wind surfing using waves in the sea. When it is assumed that a magnetic force distribution wave of a magnet is regarded as a vector, the magnetic field surfing is to surf a stationary magnetic force vector wave with a rotating magnetic force vector wave. For example, the magnetic field surfing may be performed using a relative phase difference between a magnetic field generated between the plurality of first magnet units 271, 272, and 275 provided on the first non-rotor 170 and the magnetic field generated between the plurality of second magnet units 221, 222, and 225 provided on the rotor 120. As mentioned above, the magnetic field surfing may be performed using a relative phase difference between the magnetic field generated between the plurality of fourth magnet units 271a, 272a, and 275a provided on the second non-rotor 171 and the magnetic field generated between the plurality of third magnet units 221a, 222a, and 225a provided on the rotor 120.

Further, when the rotor 120 rotates slower than the preset speed or after the preset time has elapsed, the power supply 190 may supply power to the motor 192 again. Accordingly, the rotor 120 rotates at the preset speed again. As described above, while the rotor 120 rotates, the power supply 190 may repeat the supply and block of the power. For example, the supply and block of the power may be repeated at a specific period. Alternatively, the supply and block of the power may be aperiodically repeated on the basis of, for example, the speed of the rotor 120. For example, a degree of rotation of the rotor 120 may be checked using a speed sensor or the like, and the supply and block of the power may be repeated according to the checked result.

Meanwhile, when a surfing operation of the rotor 120 is not smoothly performed (or when a desired level of surfing is not achieved), the surfing operation may be reattempted by adjusting the intervals between the rotor 120 and the non-rotors 170 and 171. The intervals are important factors affecting the surfing operation of the rotor 120. As the intervals between the rotor 120 and the non-rotors 170 and 171 decrease, the repulsive force increases. When the intervals between the rotor 120 and the non-rotors 170 and 171 become specific values, a high speed may be achieved even with low power.

Meanwhile, an attractive force is generated between the plurality of fifth magnet units 321 and the plurality of sixth magnet units 371. However, as the rotor 120 rotates and the magnetic field surfing is performed, the plurality of conductor units 391 are arranged in the attractive force generated by the plurality of fifth magnet units 321 and the plurality of sixth magnet units 371, and thus an induced current may be generated in the plurality of conductor units 391. As a result, power may be generated. The generated power may be output to the outside. Alternatively, some of the generated power may be restored to the power supply 190.

Hereinafter, the magnetic field surfing operation will be described in more detail with reference to FIGS. 3 to 11.

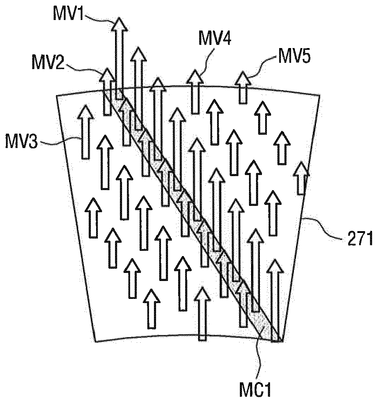

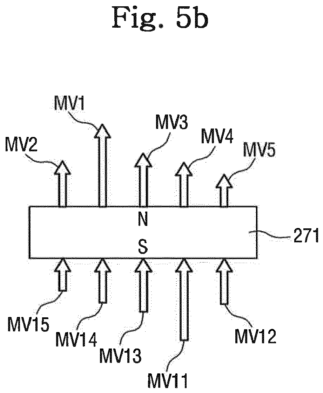

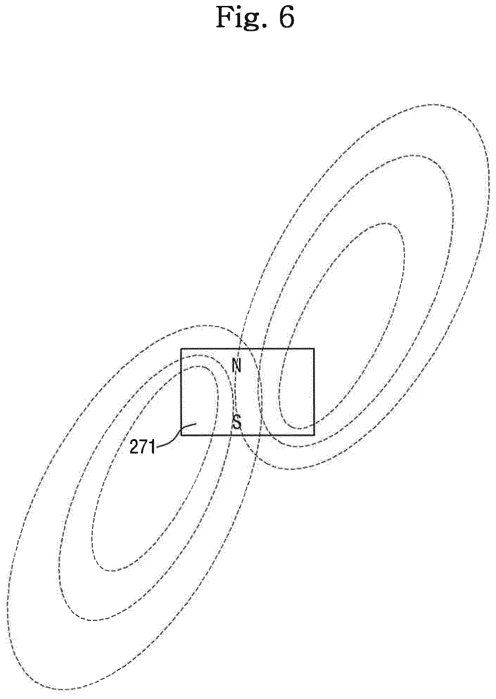

First, the first non-rotor 170 will be described with reference to FIGS. 3 to 6. FIG. 3 is a view for describing the first non-rotor of FIG. 1, which is a view for describing a surface facing the second portion of the rotor. FIG. 4 is a conceptual view for describing a relationship between the plurality of first magnet units provided on the first non-rotor of FIG. 3. FIGS. 5A, 5B, and 6 are conceptual views for describing the magnetic field of the first magnet units provided on the first non-rotor of FIG. 3.

First, referring to FIG. 3, the plurality of first magnet units 271, 272, and 275 are arranged on the first non-rotor 170. The plurality of first magnet units 271, 272, and 275 may form a plurality of columns L1, L2, and L3 about the shaft 110. Therefore, for example, a distance from the shaft 110 to a first column L1 is smaller than a distance from the shaft 110 to a second column L2. In FIG. 3, three columns L1, L2, and L3 are shown, but the present disclosure is not limited thereto. The plurality of first magnet units 271, 272, and 275 may be formed in any column as long as the plurality of first magnet units 271, 272, and 275 can form a plurality of columns, for example, four columns or more.

The plurality of first magnet units 271, 272, and 275 spaced apart from each other are respectively arranged in the columns L1, L2, and L3. Particularly, the number of the plurality of first magnet units 271 arranged in the first column L1 and the number of the plurality of first magnet units 272 arranged in the second column L2 may be equal. For example, fourteen first magnet units 271, 272, and 275 may be respectively arranged in the columns L1, L2, and L3. The fourteen first magnet units 271, 272, and 275 are shown in the drawing, but the present disclosure is not limited thereto. For example, eleven to twenty-four first magnet units may be arranged.

Meanwhile, the same numbers of first magnet units 271, 272, and 275 are shown to be respectively arranged in the columns L1, L2, and L3, but the present disclosure is not limited thereto. According to the design, a different number of first magnet units 271, 272, and 275 may be arranged. For example, since the first column L1 is a column in direct contact with the shaft 110, the number of the first magnet units 271 may be smaller than that of each of the first magnet units 272 and 275 when there is a space limitation.

Further, as shown in FIG. 3, intervals W1, W2, and W3 between the plurality of first magnet units 271, 272, and 275 respectively arranged in the columns L1, L2, and L3 may be different from each other. For example, the interval W2 between the plurality of first magnet units 272 arranged in the second column L2 may be greater than the interval W1 between the plurality of first magnet units 271 arranged in the first column L1.

Further, a first distance P1 between the first column L1 and the second column L2 and a second distance P2 between the second column L2 and a third column L3 may be equal to each other, but the present disclosure is not limited thereto. According to the design, the first distance P1 and the second distance P2 may be different from each other.

Meanwhile, as shown in FIG. 4, a central axis CL of the first magnet unit 271 in the first column L1, the central axis CL of the first magnet unit 272 in the second column L2, and the central axis CL of the first magnet unit 275 in the third column L3 may be parallel to each other. In other words, the first magnet units 271, 272, and 275 respectively arranged in the columns L1, L2, and L3 may be arranged in the same phase. Alternatively, the central axis CL of the first magnet unit 271 in the first column L1, the central axis CL of the first magnet unit 272 in the second column L2, and the central axis CL of the first magnet unit 275 in the third column L3 have a phase difference of zero. Alternatively, an arrangement of the first magnet units 271, 272, and 275 respectively arranged in the columns L1, L2, and L3 may have a first phase difference unlike an arrangement of the second magnet units 221, 222, and 225 respectively arranged in columns L4, L5, and L6. For example, the first phase difference may be zero, but the present disclosure is not limited thereto.

Further, sizes of the first magnet units 271, 272, and 275 respectively arranged in the columns L1, L2, and L3 may be different from each other. The size of the first magnet unit 272 in the second column L2 may be greater than the size of the first magnet unit 271 in the first column L1. The size of the first magnet unit 275 in the third column L3 may be greater than the size of the first magnet unit 272 in the second column L2. Further, the sizes of the first magnet units 271 arranged in the respective columns (e.g., L1) may be equal to each other.

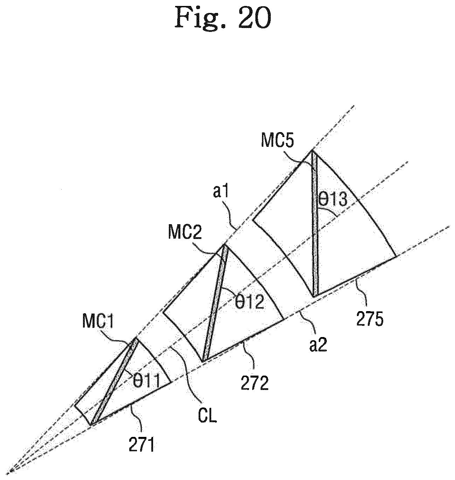

Further, when two straight lines a1 and a2 which point outward about the shaft 110 are drawn, the first magnet unit 271 in the first column L1, the second magnet unit 272 in the second column L2, and the first magnet unit 275 in the third column L3 may be in contact with both of the two straight lines a1 and a2. Here, the contact with the two straight lines a1 and a2 means that sidewalls of the first magnet units 271, 272 and 275 overlap the two straight lines a1 and a2. Meanwhile, according to the design, the straight lines a1 and a2 may not overlap entire sidewalls of the first magnet units 271, 272, and 275 (see FIG. 20).

Meanwhile, the central axes CL of the first magnet units 271, 272, and 275 respectively arranged in the columns L1, L2, and L3 have a phase difference from magnetic field axes MC1, MC2, and MC5. As shown in the drawing, the central axes CL and the magnetic field axes MC1, MC2, and MC5 may not be parallel to each other.

For example, as shown in the drawing, there may be angular differences θ11, θ12, and θ13 between the corresponding central axes CL and magnetic field axes MC1, MC2, and MC5. The angular differences θ11, θ12, and θ13 may compose acute angles in a first direction (e.g., counterclockwise) about the central axes CL. Meanwhile, the angular differences θ11, θ12, and θ13 between the corresponding central axes CL and magnetic field axes MC1, MC2, and MC5 may be completely equal to each other. Alternatively, the angular differences θ11, θ12, and θ13 may be different from each other. Alternatively, the angular differences θ11 and θ12 may be equal to each other, and the angular difference θ13 may be different from the angular differences θ11 and θ12. The angular differences may be changed according to the design.

Here, referring to FIGS. 5A, 5B, and 6, FIG. 5A is a plan view of the first magnet unit (e.g., 271). For example, FIG. 5A is a view showing an N pole of the first magnet unit 271. FIG. 5B is a view showing magnetic field vector waves in the first magnet unit 271. As shown in FIGS. 5A and 5B, the first magnet unit 271 has an unbalanced arbitrary magnetic field so that the magnetic field vector waves MV1 to MV5 and MV11 to MV15 of the first magnet unit 271 are unbalanced. For example, the magnetic field vector waves MV1 may be largest at the N pole of the first magnet unit 271, and may be biased to one side (left side in the drawing). The magnetic field vector waves MV11 may be largest at the S pole of the first magnet unit 271, and may be biased to the other side (right side in the drawing).

The magnetic field axis MC1 may be a continuous flow connecting the largest magnetic force vector waves MV1, as shown in FIG. 5A.

Meanwhile, the shapes of the unbalanced magnetic field vector waves are not limited to those in each of FIGS. 4, 5A, 5B, and 6. For example, in FIG. 4, the central axes CL and the magnetic field axes MC1, MC2, and MC5 are shown as crossing each other, but the present disclosure is not limited thereto. The central axes CL and the magnetic field axes MC1, MC2, and MC5 may have different shapes as long as they are not parallel to each other (or they have a phase difference). For example, as shown in FIG. 5A, when the first magnet unit 271 has a trapezoidal shape (a shape similar to a trapezoid), the magnetic field axes may be arranged parallel to an inclined side edge (a left or right side edge of FIG. 6A) of the trapezoidal shape. That is, the magnetic field axis may extend along the inclined side edge.

As shown in FIG. 6, the first magnet unit 271 may have a magnetic flux of a magnetic field whose N pole and S pole are not equal to each other. For example, angles of the N pole and the S pole may range from 0 degree to 45 degrees, and the magnetic force may range from 3,000 gauss to 5,000 gauss, but the present disclosure is not limited thereto.

Next, the rotor 120 will be described with reference to FIGS. 7 and 8.

FIG. 7 is a view for describing the second portion of the rotor of FIG. 1. FIG. 8 is a conceptual view for describing a relationship between the plurality of second magnet units provided on the rotor of FIG. 7.

Referring to FIGS. 7 and 8, the plurality of second magnet units 221, 222, and 225 are arranged on the second portion 122 of the rotor 120. The plurality of second magnet units 221, 222, and 225 may form the plurality of columns L4, L5, and L6 about the shaft 110. Therefore, for example, a distance from the shaft 110 to a fourth column L4 is smaller than a distance from the shaft 110 to a fifth column L5. In FIG. 7, three columns L4, L5, and L6 are shown in the drawing, but the present disclosure is not limited thereto. The plurality of second magnet units 221, 222, and 225 may be formed in any column as long as the plurality of second magnet units 221, 222, and 225 can form a plurality of columns, for example, four columns or more.

The fourth column L4 of the rotor 120 rotates while facing the first column L1 of the first non-rotor 170, and the fifth column L5 of the rotor 120 rotates while facing the second column L2 of the first non-rotor 170. A sixth column L6 of the rotor 120 rotates while facing the third column L3 of the first non-rotor 170.

The plurality of second magnet units 221, 222, and 225 spaced apart from each other are respectively arranged in the columns L4, L5, and L6. Particularly, the number of the plurality of second magnet units 221 arranged in the fourth column L4 and the number of the plurality of second magnet units 222 arranged in the fifth column L5 may be equal. Thirteen second magnet units 221 are arranged in the fourth column L4, and thirteen second magnet units 222 are arranged in the fifth column L5. For example, eleven to twenty-four second magnet units 221, 222, and 225 may be respectively arranged in the fourth column L4 and the fifth column L5.

Meanwhile, the same numbers of second magnet units 221, 222, and 225 are shown to be respectively arranged in the columns L4, L5, and L6, but the present disclosure is not limited thereto. According to the design, different numbers of second magnet units 221, 222, and 225 may be arranged. For example, since the fourth column L4 is a column in direct contact with the shaft 110, the number of the second magnet units 221 may be smaller than that of each of the second magnet units 222 and 225 when there is a space limitation.

As described above, the fourth column L4, the fifth column L5, and the sixth column L6 rotate while facing the first column L1, the second column L2, and the third column L3, respectively. However, the number of the plurality of first magnet units 271 arranged in the first column L1 and the number of the plurality of second magnet units 221 arranged in the fourth column L4 are different from each other. As mentioned above, the number of the plurality of first magnet units 272 arranged in the second column L2 and the number of the plurality of second magnet units 222 arranged in the fifth column L5 may be different from each other.

Further, an interval W4 between the plurality of second magnet units 221 arranged in the fourth column L4 is smaller than an interval W5 between the plurality of second magnet units 222 arranged in the fifth column L5. As mentioned above, the interval W5 between the plurality of second magnet units 222 arranged in the fifth column L5 is smaller than an interval W6 between the plurality of second magnet units 225 arranged in the sixth column L6.

Further, a third distance P3 between the fourth column L4 and the fifth column L5 and a fourth distance P4 between the fifth column L5 and the sixth column L6 may be equal to each other, but the present disclosure is not limited thereto. According to the design, the third distance P3 and the fourth distance P4 may be different from each other.

A size of the second magnet unit 222 in the fifth column L5 may be greater than a size of the second magnet unit 221 in the fourth column L4. A size of the second magnet unit 225 in the sixth column L6 may be greater than a size of the second magnet unit 222 in the fifth column L5.

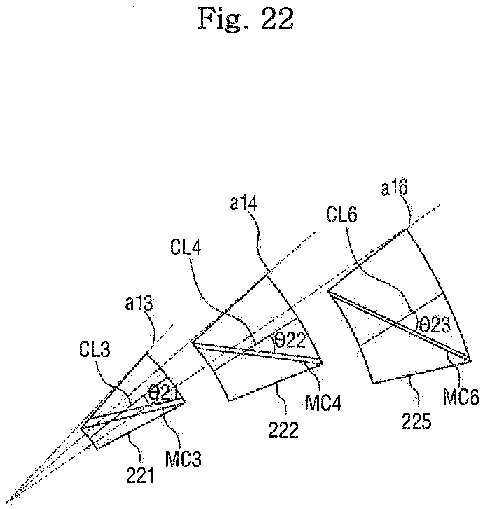

As shown in FIG. 8, a central axis CL3 of the second magnet unit 221 in the fourth column L4 and a central axis CL4 of the second magnet unit 222 in the fifth column L5 may not be parallel to each other (i.e., have a phase difference). Particularly, the second magnet unit 222 in the fifth column L5 may be arranged behind the second magnet unit 221 in the fourth column L4 with a phase difference therebetween. The second magnet unit 225 in the sixth column L6 may be arranged behind the second magnet units 222 in the fifth column L5 with a phase difference therebetween. Alternatively, an arrangement of the second magnet units 221, 222, and 225 respectively arranged in the columns L4, L5, and L6 may have a second phase difference unlike an arrangement of the first magnet units 271, 272, and 275 respectively arranged in the columns L1, L2, and L3. For example, the second phase difference may be a non-zero value. For example, a straight line a3, which points outward about the shaft and is in contact with the second magnet unit 222 in the fifth column L5, may not be in contact with the second magnet unit 221 in the fourth column L4 and the second magnet unit 225 in the sixth column L6. According to the design, the straight line a3 may not overlap an entire sidewall of the second magnet unit 222 (see FIG. 22).

The central axes CL3, CL4, and CL6 of the second magnet units 221, 222, and 225 respectively arranged in the columns L4, L5, and L6 are not parallel to corresponding magnetic field axes MC3, MC4, and MC6 (i.e., have a phase difference). For example, there may be angular differences θ21, θ22, and θ23 between the corresponding central axes CL3, CL4, and CL6 and magnetic field axes MC3, MC4, and MC6. The angular differences θ21, θ22, and θ23 may compose acute angles in a second direction (e.g., clockwise) about the central axes CL3, CL4, and CL6. Meanwhile, the angular differences θ21, θ22, and θ23 between the corresponding central axes CL3, CL4, and CL6 and magnetic field axes MC3, MC4, and MC6 may be completely equal to each other. Alternatively, the angular differences θ21, θ22, and θ23 may be different from each other. Alternatively, the angular differences θ21 and θ22 may be equal to each other, and the angular difference θ23 may be different from the angular differences θ21 and θ22. The angular differences may be changed according to the design.

The shapes of the unbalanced magnetic field vector waves are not limited to those in FIG. 8. For example, in FIG. 8, the central axes CL3, CL4, and CL6 and the magnetic field axes MC3, MC4, and MC6 are shown as crossing each other, but the present disclosure is not limited thereto. The central axes CL3, CL4, and CL6 and the magnetic field axes MC3, MC4, and MC6 may have different shapes as long as they are not parallel to each other (or have a phase difference). For example, when the magnetic unit 221 has a trapezoidal shape (a shape similar to a trapezoid), the magnetic field axis may be arranged parallel to an inclined side edge (a left or right side edge) of the trapezoidal shape. That is, the magnetic field axis may extend along the inclined side edge.

Meanwhile, the third portion 123 of the rotor 120 (the magnet arrangement) is substantially the same as the second portion 122 of the rotor 120 (the magnet arrangement). The second non-rotor 171 (the magnet arrangement) is substantially the same as the first non-rotor 170 (the magnet arrangement). An arrangement relationship between the third portion 123 of the rotor 120 and the second non-rotor 171 is also substantially the same as an arrangement relationship between the second portion 122 of the rotor 120 and the first non-rotor 170.

In summary, the second non-rotor 171 and the third portion 123 of the rotor 120 are arranged to face each other. The plurality of fourth magnet units 271a, 272a, and 275a may be arranged on the second non-rotor 171 to form a plurality of columns (e.g., three columns). The plurality of third magnet units 221a, 222a, and 225a may be arranged on the third portion 123 of the rotor 120 in a plurality of columns (e.g., three columns).

Further, the third magnet units 221a, 222a, and 225a and the fourth magnet units 271a, 272a, and 275a may have unbalanced magnetic force vector waves. Central axes and magnetic field axes of the third magnet units 221a, 222a, and 225a are not parallel to each other (have a phase difference), and central axes and the magnetic field axes of the fourth magnet units 271a, 272a, and 275a are also not parallel to each other (have a phase difference).

Meanwhile, according to the design, the arrangement of the magnetic units 221, 222, 225, 221a, 222a, and 225a on the rotor 120 may be opposite of the arrangement of the magnetic units 271, 272, 275, 271a, 272a, and 275a on the non-rotors 170 and 171. That is, the magnetic units 221, 222, 225, 221a, 222a, and 225a on the rotor 120 may be arranged without a phase difference (e.g., similar to that in FIG. 3), and the magnetic units 271, 272, 275, 271a, 272a, and 275a on the non-rotors 170 and 171 may be arranged such that there are phase differences with respect to each other (e.g., similar to that in FIG. 7).

Meanwhile, according to the design, the angular differences θ21, θ22, and θ23 of the magnetic units 221, 222, and 225 arranged on one surface of the rotor 120 may be different from angular differences of the magnetic units 221a, 222a, and 225a arranged on the other surface of the rotor 120. For example, in the magnetic unit 221, the angular difference θ21 between the central axis and the magnetic field axis may be 30°, and in the other magnetic unit 221a, the angular difference between the central axis and the magnetic field axis may be 40°.

Further, according to the design, an arrangement method of the magnetic units 221, 222, and 225 arranged on one surface of the rotor 120 and an arrangement method of the magnetic units 221a, 222a, and 225a arranged on the other surface may be different from each other. For example, as shown in FIG. 8, the magnetic unit 222 may be arranged at a position biased by an angle of 5° clockwise from the magnetic unit 221, and the magnetic unit 225 may be arranged at a position biased by an angle of 8° clockwise from the magnetic unit 222. On the other hand, the magnetic unit 222a may be arranged at a position biased by an angle of 3° counterclockwise from the magnetic unit 221a, and the magnetic unit 225 may be arranged at a position biased by an angle of 10° counterclockwise from the magnetic unit 222.

A relationship between the fifth magnet units 321, the sixth magnet units 371, and the conductor units 391 will be described with reference to FIGS. 9 to 15.

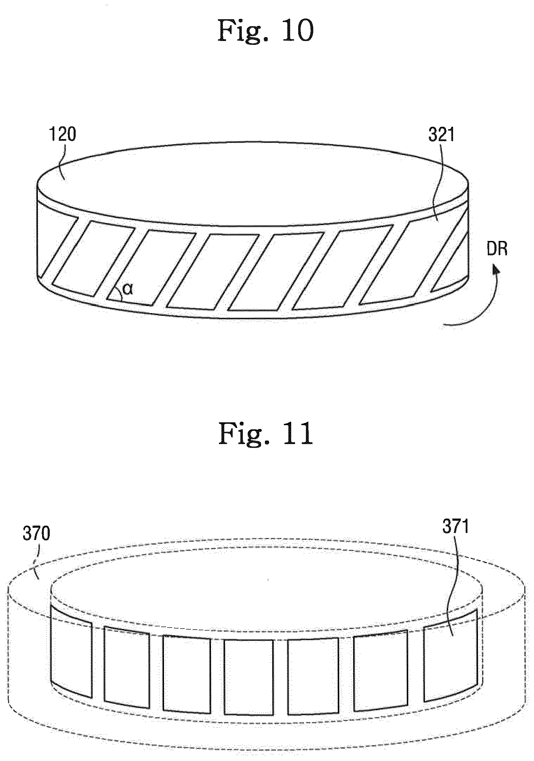

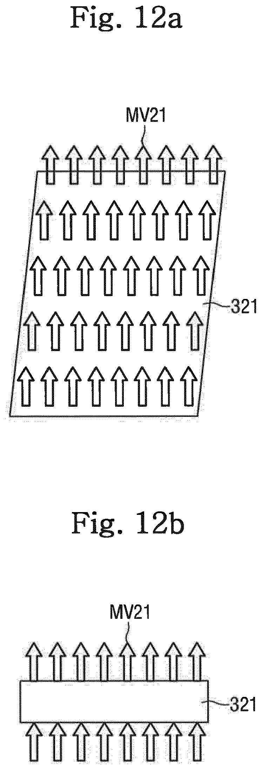

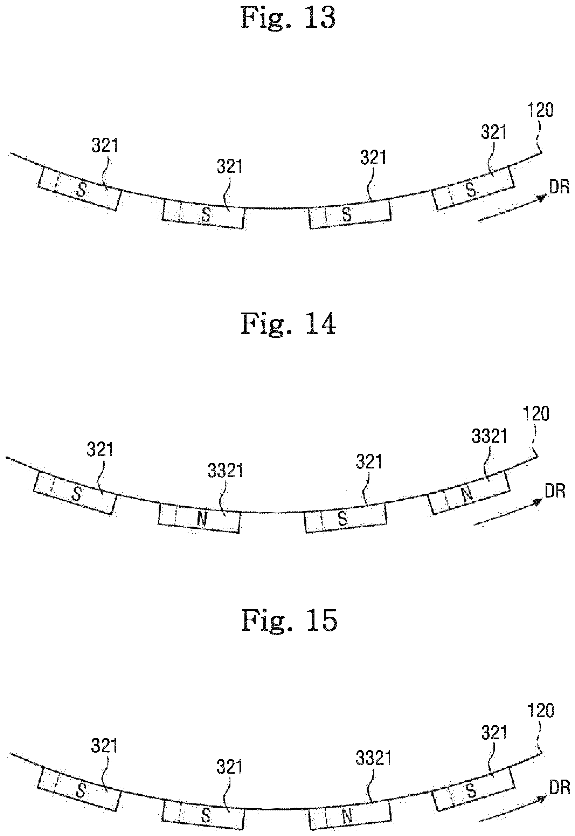

FIG. 9 is a schematic view for describing the relationship between the fifth magnet units, the sixth magnet units, and the conductor units, FIG. 10 is a view showing the plurality of fifth magnet units provided on the first portion of the rotor, and FIG. 11 is a view showing the plurality of sixth magnet units provided on the supporter. FIGS. 12A and 12B are conceptual views for describing a magnetic field of the fifth magnet unit. FIGS. 13 to 15 are conceptual views for describing an arrangement of the fifth magnet units and/or an arrangement of seventh magnet units.

First, referring to FIGS. 9 to 11, the plurality of fifth magnet units 321 are provided on the first portion 121 of the rotor 120. The fifth magnet units 321 may form one column or a plurality of columns. The fifth magnet units 321 may have a second polarity (e.g., an S pole).

The plurality of sixth magnet units 371 are provided on the supporter 370. The sixth magnet units 371 may form one column or a plurality of columns. The sixth magnet units 371 may have a first polarity (e.g., an N pole). A groove 3701 may be formed in the supporter 370 and the plurality of sixth magnet units 371 may be arranged in the groove 3701.

A plurality of conductor units 3911 and 3912 are arranged between the first portion 121 and the supporter 370. The plurality of conductor units 3911 and 3912 may be arranged between the plurality of fifth magnet units 321 and the plurality of sixth magnet units 371. As shown in the drawings, the plurality of conductor units 3911 and 3912 may be fixedly provided on the supporter 370.

Meanwhile, the number of the plurality of fifth magnet units 321 and the number of the plurality of sixth magnet units 371 may be different from each other. The number of the plurality of fifth magnet units 321 and the number of the plurality of sixth magnet units 371 may be changed according to sizes of the rotor 120 and the supporter 370 and sizes of the fifth magnet units 321 and the sixth magnet units 371, respectively. For example, twenty-four fifth magnet units 321 may be provided on the first portion 121, and thirty sixth magnet units 371 may be provided on the supporter 370.

Further, the number of the plurality of conductor units 3911 and 3912 may also be different from the number of the plurality of fifth magnet units 321 and the number of the plurality of sixth magnet units 371. For example, since the plurality of conductor units 3911 and 3912 are fixed to the supporter 370, the number of the plurality of conductor units 3911 and 3912 may be related to the number of the plurality of sixth magnet units 371. For example, the number of the plurality of conductor units 3911 and 3912: the number of the plurality of sixth magnet units 371 may be n : 1 (here, n is a natural number of 1 or more). For example, when thirty sixth magnet units 371 are provided, sixty conductor units 3911 and 3912 may be provided.

Here, referring to FIGS. 10 and 11, shapes of the fifth magnet units 321 and shapes of the sixth magnet units 371 may be different from each other. For example, the fifth magnet units 321 may be trapezoidal. That is, since the trapezoidal shape refers to a rectangular shape in which a pair of opposite edges are parallel to each other, the trapezoid may include a parallelogram, a diamond, and the like.

For example, as shown in FIG. 10, when the fifth magnet unit 321 is a parallelogram, an inclined degree α of the parallelogram may vary according to a rotational speed and a rotational direction DR of the rotor 120.

As shown in FIG. 11, the sixth magnet units 371 may be rectangular. That is, since the rectangular shape refers to a rectangular shape in which all four angles thereof are right angles, the rectangular shape may also include a square.

The sizes of the fifth magnet units 321 and the sixth magnet units 371 may vary according to a target production amount of power, sizes of the conductor units 3911 and 3912, and the like.

The shapes of the fifth magnet units 321 and the sixth magnet units 371 may be different from those shown in FIGS. 10 and 11. The fifth magnet units 321 may be rectangular, and the sixth magnet units 371 may be trapezoidal. Alternatively, any of the fifth magnet units 321 and the sixth magnet units 371 may be trapezoidal. Any of the fifth magnet units 321 and the sixth magnet units 371 may be rectangular.

According to the design, in the case in which the fifth magnet units 321 are parallelogramical and the sixth magnet units 371 are rectangular, power generation efficiency may be further improved in comparison to the case in which any of the fifth magnet units 321 and the sixth magnet units 371 may be parallelogramical or rectangular.

Further, referring to FIGS. 12A and 12B, as described above, the first magnet units 271, 272, and 275 to the fourth magnet units 271a, 272a, and 275a may have unbalanced magnetic force vector waves, while the fifth magnet units 321 and the sixth magnet units 371 may have balanced magnetic force vector waves. That is, the magnitude of any of magnetic force vector waves MV21 coming out from a surface of the fifth magnet unit (e.g., 321) may be constant. In other words, the fifth magnet unit 321 does not have a magnetic field axis (a connection line of the largest magnetic force vector waves, for example, the magnetic field axis MC1 of the first magnet unit 271).

Further, as shown in FIG. 13, only the plurality of fifth magnet units 321 may be provided on the first portion 121 of the rotor 120.

Alternatively, as shown in FIGS. 14 and 15, a seventh magnet unit 3321 having a polarity different from that of the fifth magnet unit 321 may be provided on the first portion 121 of the rotor 120. That is, as shown in FIG. 14, one fifth magnet unit 321 and one seventh magnet unit 3321 may be alternately arranged, and as shown in FIG. 15, after two or more fifth magnet units 321 are continuously arranged, the seventh magnet unit 3321 having a different polarity may be arranged.

Similar to the fifth magnet unit 321, the seventh magnet unit 3321 may also have a trapezoidal shape.

As shown in FIGS. 14 and 15, when the seventh magnet unit 3321 is arranged in the first portion 121, a repulsive force is generated between the seventh magnet unit 3321 and the sixth magnet unit 371. As described above, an appropriate number of seventh magnet units 3321 is included in the first portion 121, and thus the total magnitude of the attractive force generated between the plurality of fifth magnet units 321 and the plurality of sixth magnet units 371 may be adjusted. Accordingly, it is possible to adjust the rotation of the rotor 120 that is interfered by the attractive force.

Next, referring to FIGS. 1, 3, 7, and 16, although the first non-rotor 170 and the second portion 122 of the rotor 120 face each other, a distance P11 from the shaft 110 to the first column L1 (i.e., the first magnet unit 271 in the first column L1) and a distance P12 from the shaft 110 to the fourth column L4 (i.e., the second magnet unit 221 in the fourth column L4) may be different from each other.

As mentioned above, a distance from the shaft 110 to the second column L2 and a distance from the shaft 110 to the fifth column L5 may be different from each other. A distance from the shaft 110 to the third column L3 and a distance from the shaft 110 to the sixth column L6 may be different from each other.

Particularly, when the first magnet unit 271 and the second magnet unit 221 have S poles, the distance P12 may be shorter than the distance P11.

Similarly, a distance P11a from the shaft 110 to the fourth magnet units 271a and a distance P12a from the shaft 110 to the third magnet unit 221a may be different from each other. Further, a distance from the shaft 110 to the fourth magnet unit 272a and a distance from the shaft 110 to the third magnet unit 222a may be different from each other. A distance from the shaft 110 to the fourth magnet unit 275a and a distance from the shaft 110 to the third magnet unit 225a may be different from each other.

Here, when the fourth magnet unit 271a and the third magnet unit 221a have N poles, the distance P11a from the shaft 110 to the fourth magnet unit 271a may be longer than the distance P12a from the shaft 110 to the third magnet units 221a.

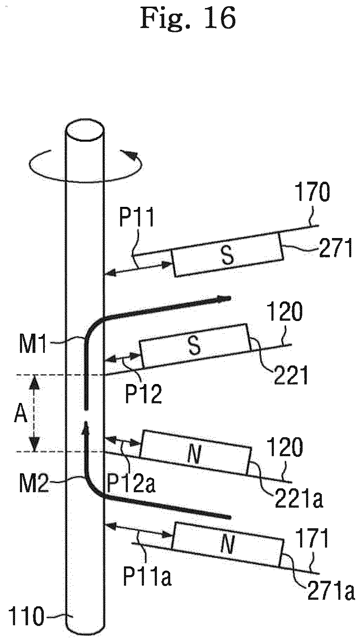

Referring to FIG. 16, a large flow of the magnetic field inside the power generation apparatus may be made by adjusting the distances P11, P12, P11a, and P12a in this manner.

Due to the biased arrangement of the plurality of fourth magnet units 271a, 272a, and 275a and the plurality of third magnet units 221a, 222a, and 225a (i.e., some of the fourth magnet units 271a, 272a, and 275a face some of the third magnet units 221a, 222a, and 225a), a flow of the magnetic field is concentrated while rotating from the outside toward the central portion (see a reference symbol M2, and this is referred to herein as a magnetic field tornado).

Further, due to the biased arrangement of the plurality of first magnet units 271, 272, and 275 and the plurality of second magnet units 221, 222, and 225 (i.e., some of the first magnet units 271, 272, and 275 face some of the second magnet units 221, 222, and 225), a flow of the magnetic field is diffused to the outer side (outer peripheral portion) while rotating at the central portion (see a reference symbol M1, and this is referred to herein as a magnetic field cyclone).

That is, due to the arrangement of the magnetic units in the rotor 120, the first non-rotor 170 and the second non-rotor 171, a rotation cycle is formed (induced) in a direction from the outside (outer circumference) to a center of rotation, a rising center, and the outside (outer peripheral portion) (by rotational diffusion). This is a Möbius cyclone phenomenon, resulting in a magnetic field induction.

A large magnetic field flow such as the magnetic field tornado or the magnetic field cyclone assists the stable rotation of the rotor 120. A continuous magnetic field Möbius rotation routine is formed and thus a rotation effect occurs.

Here, when the rotor 120 includes the first dent portion 1120 and the second dent portion 1121, the second magnet units 221, 222, and 225 are arranged in the first dent portion 1120, and the third magnet units 221a, 222a, and 225a are arranged in the second dent portion 1121, the magnetic field tornado and the magnetic field cyclone may be larger. The aforementioned results are because an interval A between the first dent portion 1120 and the second dent portion 1121 is reduced because there are the first dent portion 1120 and the second dent portion 1121. Therefore, this is because a process of changing from the magnetic field tornado to the magnetic field cyclone may be performed with minimizing the leakage of the magnetic field.

Further, the rotor 120 includes the first dent portion 1120 and the second dent portion 1121, and the first non-rotor 170 and the second non-rotor 171 include the first protrusion 1170 and the second protrusion 1171, respectively. Accordingly, intervals between the plurality of first magnet units 271, 272, and 275 and the plurality of second magnet units 221, 222, and 225 and intervals between the plurality of third magnet units 221a, 222a, and 225a and the plurality of fourth magnet units 271a, 272a, and 275a may be stably adjusted, and the repulsive force between the plurality of first magnet units 271, 272, and 275 and the plurality of second magnet units 221, 222, and 225 and the repulsive force between the plurality of third magnet units 221a, 222a, and 225a and the plurality of fourth magnet units 271a, 272a, and 275a may be maximized. Further, since the first dent portion 1120 faces the first protrusion 1170 and the second dent portion 1121 faces the second protrusion 1171, the rotor 120, the first non-rotor 170, and the second non-rotor 171 may be implemented in a minimized space.

Here, a method of driving the power generation apparatus according to some embodiments of the present disclosure will be described with reference to FIGS. 1, 3, 7, and 17.

First, the power supply 190 supplies power for a first period. The first period may be determined by the sizes of the rotor 120, the first non-rotor 170, and the second non-rotor 171, the sizes and the magnetic force of the first magnet units 271, 272, and 275, the sizes and the magnetic force of the second magnet units 221, 222, and 225, the sizes and the magnetic force of the third magnet units 221a, 222a, and 225a, the sizes and the magnetic force of the fourth magnet units 271a, 272a, and 275a, the sizes and the magnetic force of the fifth magnet units 321, the sizes and the magnetic force of the sixth magnet units 371, and the like.

The first period may be, for example, a period during which the rotor 120 may sufficiently rotate so that the rotor 120 may have inertia. For example, the power supply 190 may supply power only for a period during which the rotor 120 rotates 1,000 to 3,000 times.

Next, the power supply 190 does not supply the power for a second period after the first period. Even when the power supply 190 does not supply the power, the rotor 120 may continuously rotate using the magnetic field surfing operation.

After the second period, the power supply 190 may supply the power again. In this manner, the power supply 190 may periodically repeat operations of supplying and blocking of the power.

Meanwhile, when a surfing operation of the rotor 120 is not smoothly performed (or when a desired level of surfing is not achieved), the surfing operation may be retried by adjusting the interval between the first non-rotor 170 and the rotor 120 and the interval between the second non-rotor 171 and the rotor 120.

While the rotor 120 rotates in this way, a current may be induced in the plurality of conductor units 391, and as a result, power may be generated. The generated power may be output to the outside. Alternatively, some of the generated power may be restored to the power supply 190.

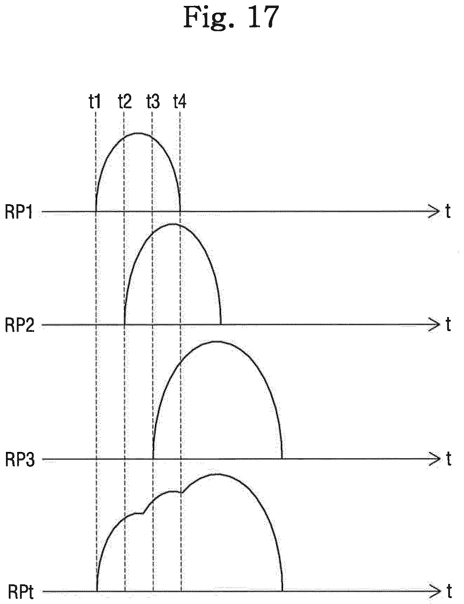

Meanwhile, to describe the magnetic field surfing operation in more detail with reference to FIG. 17, at a time t1, a first repulsive force RP1 begins to be generated while the first magnet unit 271 in the first column L1 and the second magnet unit 221 in the fourth column L4 cross each other (or overlap each other).

Since the first repulsive force RP1 increases as a crossing area (an overlapped area) of the first magnet unit 271 and the second magnet unit 221 increases, the first repulsive force RP1 increases while the rotor 120 rotates.

At a time t2, a second repulsive force RP2 begins to be generated while the first magnet unit 272 in the second column L2 and the second magnet unit 222 in the fifth column L5 cross each other (or overlap each other). This is because the second magnet unit 222 in the fifth column L5 is arranged behind the second magnet unit 221 in the fourth column L4 with a phase difference therebetween.

A total repulsive force RPt may be gradually increased over the time t1 and the time t2. That is, the rotor 120 may rotate more strongly after the time t1 and the time t2 have elapsed.

At a time t3, a third repulsive force RP3 begins to be generated while the first magnet unit 275 in the third column L3 and the second magnet unit 225 in the sixth column L6 cross each other (or overlap each other).

In summary, a time at which the second magnet unit 221 in the fourth column L4 begins to overlap the first magnet unit 271 in the first column L1 and a time at which the second magnet unit 222 in the fifth column L5 begins to overlap the first magnet unit 272 in the second column L2 are different from each other. Therefore, as described above, stationary magnetic force vector waves of the first non-rotor 170 and the second non-rotor 171 are surfed with the rotating magnetic force vector wave of the rotor 120. Further, the angular differences θ11, θ12, and θ13 may compose acute angles counterclockwise about the central axes CL, and the angular differences θ21, 022, and θ23 may compose acute angles clockwise about the central axes CL3, CL4, and CL6. With this configuration, when the rotor 120 rotates, the rotating magnetic force vector wave of the rotor 120 and the stationary magnetic force vector waves of the first non-rotor 170 and the second non-rotor 171 are connected to each other by continuous rotation.

As described above, the rotor 120 may stably rotate between the first non-rotor 170 and the second non-rotor 171 on the basis of the low power of the power supply 190.

In the power generation apparatus according to some embodiments of the present disclosure, the conductor unit 391 capable of generating power is arranged on the supporter 370, and thus the size of the power generation apparatus may be significantly reduced. That is, the power generation apparatus does not include a rotary device and a separate device for generating power by receiving a rotational force from the rotary device, and is merged into a single device. That is, the power generation apparatus may be embedded in one device. Therefore, the size of the power generation apparatus may be significantly reduced.

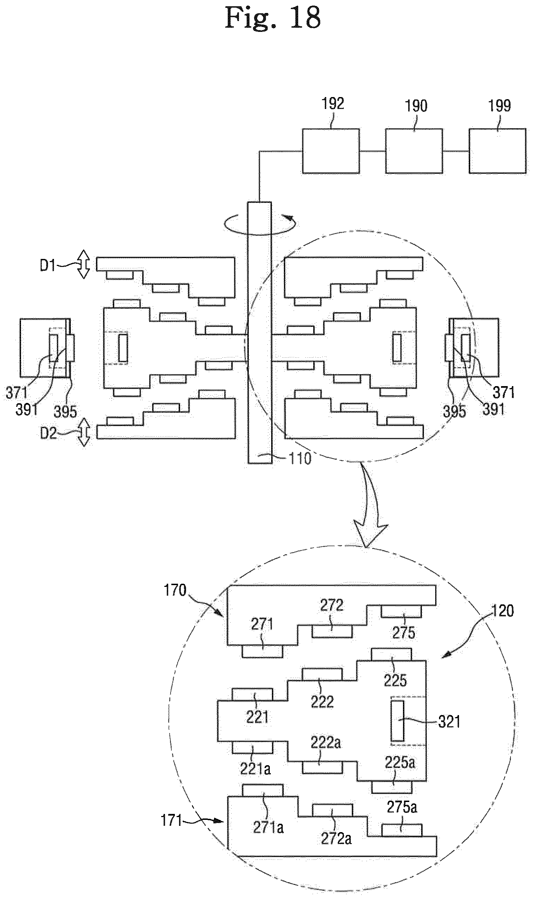

Further, in FIGS. 1 to 17, the non-rotors 170 and 171 are described as being arranged at both sides of the rotor 120, but the present disclosure is not limited thereto. That is, the non-rotor (e.g., 170) may be arranged only at one side of the rotor 120. In this case, the plurality of first magnet units 271, 272, and 275 are provided on the first non-rotor 170, and the plurality of second magnet units 221, 222, and 225 are provided on the second portion 122. The plurality of fifth magnet units 321 are provided on the first portion 121, and the plurality of sixth magnet units 371 are provided on the supporter 370. A repulsive force is generated between the first magnet units 271, 272, and 275 and the second magnet units 221, 222, and 225, and an attractive force is generated between the fifth magnet units 321 and the sixth magnet units 371. The plurality of conductor units 391 are arranged between the first portion 121 and the supporter 370, and an induced current is generated therebetween. Further, the first magnet units 271, 272, and 275 and the second magnet units 221, 222, and 225 have the unbalanced magnetic force vector waves, the central axes and the magnetic field axes of the first magnet units 271, 272, and 275 have a phase difference, and the central axes and the magnetic field axes of the second magnet units 221, 222, and 225 have a phase difference. Further, the fifth magnet units 321 and the sixth magnet units 371 have balanced magnetic force vector waves. FIG. 18 is a view for describing a power generation apparatus according to another embodiment of the present disclosure. For convenience of description, differences from those described with reference to FIGS. 1 to 16 will be mainly described.

Referring to FIG. 18, in the power generation apparatus according to another embodiment of the present disclosure, a second portion 122 (a first dent portion 1120) and a third portion 123 (a second dent portion 1121) of a rotor 120 may have a stepped shape. Further, a first non-rotor 170 (a first protrusion 1170) and a second non-rotor 171 (a second protrusion 1171) may also have a stepped shape.

Particularly, the first dent portion 1120 and the second dent portion 1121 may have a stepped shape rising from the shaft 110 toward the outside. The first protrusion 1170 and the second protrusion 1171 may have a stepped shape that is complementary to the first dent portion 1120 and the second dent portion 1121 and descending from the shaft 110 toward the outside.

Further, a groove may be formed in a first portion 121, and the plurality of fifth magnet units 321 may be arranged in the groove.

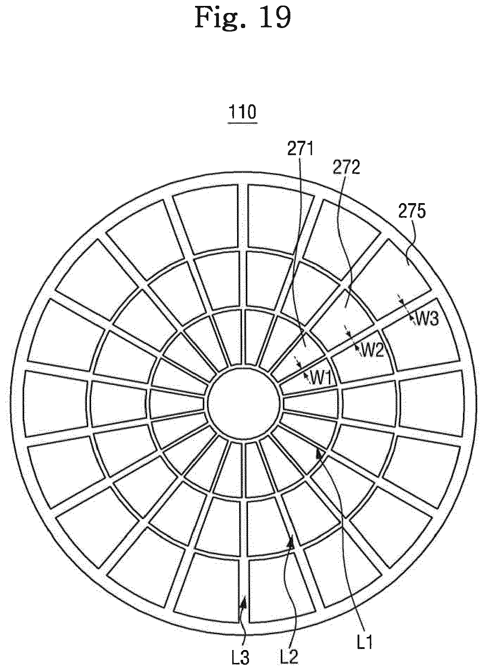

FIGS. 19 to 22 are views for describing a power generation apparatus according to still another embodiment of the present disclosure. For convenience of description, differences from those described with reference to FIGS. 1 to 16 will be mainly described.

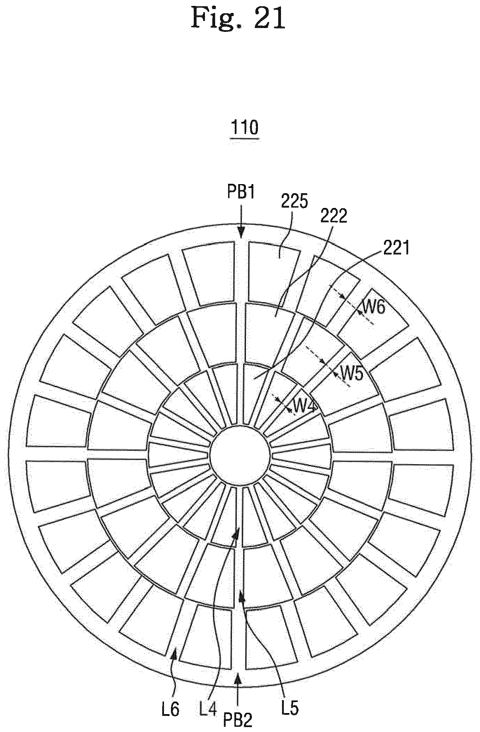

FIG. 19 is a view for describing a first non-rotor, wherein the first non-rotor may be a surface facing a second portion of a rotor. FIG. 20 is a conceptual view for describing a relationship between a plurality of first magnet units provided on the first non-rotor of FIG. 19. FIG. 21 is a view for describing the rotor, wherein the rotor may be a surface facing the first non-rotor. FIG. 22 is a conceptual view for describing a relationship between a plurality of second magnet units provided on the first non-rotor of FIG. 21.

First, referring to FIG. 19, a plurality of first magnet units 271, 272, and 275 spaced apart from each other are respectively arranged in columns L1, L2, and L3. Particularly, the number of the plurality of first magnet units 271 arranged in a first column L1 and the number of the plurality of first magnet units 272 arranged in a second column L2 may be equal. For example, eighteen first magnet units 271, 272, and 275 may be respectively arranged in the columns L1, L2, and L3.

Referring to FIG. 21, a plurality of second magnet units 221, 222, and 225 spaced apart from each other are respectively arranged in columns L4, L5, and L6. The numbers of the plurality of second magnet units 221, 222, and 225 respectively arranged in the columns L4, L5, and L6 are different from each other.

As described above, at least a portion of the first column L1 and at least a portion of the fourth column L4 may face each other, at least a portion of the second column L2 and at least a portion of the fifth column L5 may face each other, and at least a portion of the third column L3 and at least a portion of the sixth column L6 may face each other.

In this case, the number of the second magnet units 221 arranged in any one column (e.g., L4) among the plurality of columns L4, L5, and L6 of the rotor 120 may be equal to the number of the first magnet units 271 arranged in the column (e.g., L1) facing the column.

Further, the numbers of the second magnet units 222 and 225 arranged in the remaining columns (e.g., L5 and L6) among the plurality of columns L4, L5, and L6 of the rotor 120 may be different from the numbers of the first magnet units 272 and 275 arranged in the columns (e.g., L2 and L3) facing the columns. Particularly, the number of the second magnet units 222 arranged in any one column (e.g., L5) among the remaining columns (e.g., L5 and L6) may be smaller than the number of the first magnet units 272 arranged in the column (e.g., L2) facing the column. On the other hand, the number of the second magnet units 225 arranged in any one column (e.g., L6) among the remaining columns (e.g., L5 and L6) may be greater than the number of the first magnet units 275 arranged in the column (e.g., L3) facing the column.

For example, eighteen first magnet units 271, 272, and 275 are respectively arranged in the columns L1, L2, and L3 of the first non-rotor 170. The number of the second magnet units 221 arranged in the fourth column L4 of the rotor 120 may be eighteen, the number of the second magnet units 222 arranged in the fifth column L5 may be sixteen, and the number of the second magnet units 225 arranged in the sixth column L6 may be twenty. Here, the specific numbers are only exemplary.

Meanwhile, in FIG. 7, the second magnet units 221, 222, and 225 respectively arranged in the columns L4, L5, and L6 of the rotor 120 are arranged to have a phase difference from each other. On the other hand, in FIG. 21, three second magnet units 221, 222, and 225 are arranged to simultaneously begin at two points PB1 and PB2. That is, sidewalls (left sidewalls) of the three second magnet units 221, 222, and 225 may be arranged to be substantially parallel.

For example, sizes (or widths) of the second magnet units 221 arranged in the fourth column L4 and an interval W4 between adjacent second magnet units 221 are constant. Sizes (or widths) of the second magnet units 222 arranged in the fifth column L5 and an interval W5 between adjacent second magnet units 222 are constant. Sizes (or widths) of the second magnet units 225 arranged in the sixth column L6 and an interval W6 between adjacent second magnet units 225 are constant. The numbers of the second magnet units 221, 222, and 225 respectively arranged in the columns are different from each other. When the above conditions are satisfied, the points PB1 and PB2 may vary according to a greatest common divisor of the numbers of the second magnet units 221, 222, and 225 respectively arranged in the columns L4, L5, and L6 of the rotor 120. Particularly, the numbers of the second magnet units 221, 222, and 225 respectively arranged in the columns L4, L5, and L6 may not be equal to each other, and may have a greatest common divisor of 2 or higher. In FIG. 21, since a greatest common divisor of 18, 16, and 20 is 2, two points PB1 and PB2 may be generated. For example, when the numbers of the second magnet units 221, 222, and 225 respectively arranged in the columns L4, L5, and L6 are respectively 16, 12, and 20, since a greatest common divisor of 16, 12, and 20 is 4, four points may be generated.

Referring to FIG. 20, when two straight lines a1 and a2 which point outward about the shaft 110 are drawn, a portion of the sidewall of the first magnet unit 271 in the first column L1, a portion of the sidewall of the second magnet unit 272 in the second column L2, and a portion of the sidewall of the first magnet unit 275 in the third column L3 may come in contact with the two straight lines a1 and a2. For example, the aforementioned results are because the sidewalls of the first magnet units 271, 272, and 275 are inclined more than the straight lines a1 and a2.

As mentioned above, referring to FIG. 22, a straight line a3 extending outward about the shaft 110 may come in contact with a portion of the sidewall of the second magnet unit 221 in the fourth column L4. A straight line a4 extending outward about the shaft 110 may come in contact with a portion of the sidewall of the second magnet unit 222 in the fifth column L5. A straight line a6 extending outward about the shaft 110 may come in contact with a portion of the sidewall of the second magnet unit 225 in the sixth column L6.

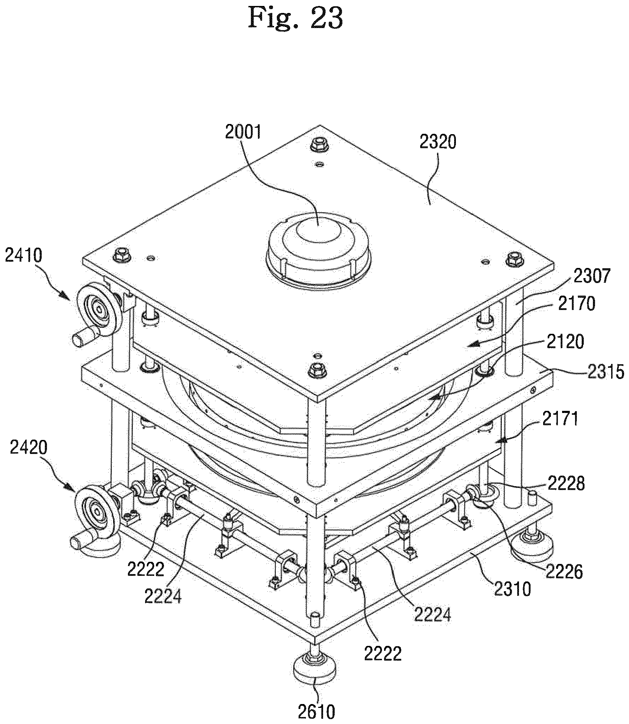

FIG. 23 is a view for describing a power generation apparatus according to yet another embodiment of the present disclosure. The power generation apparatus is an example product obtained by specifically implementing the power generation apparatus described with reference to FIGS. 1 to 22.

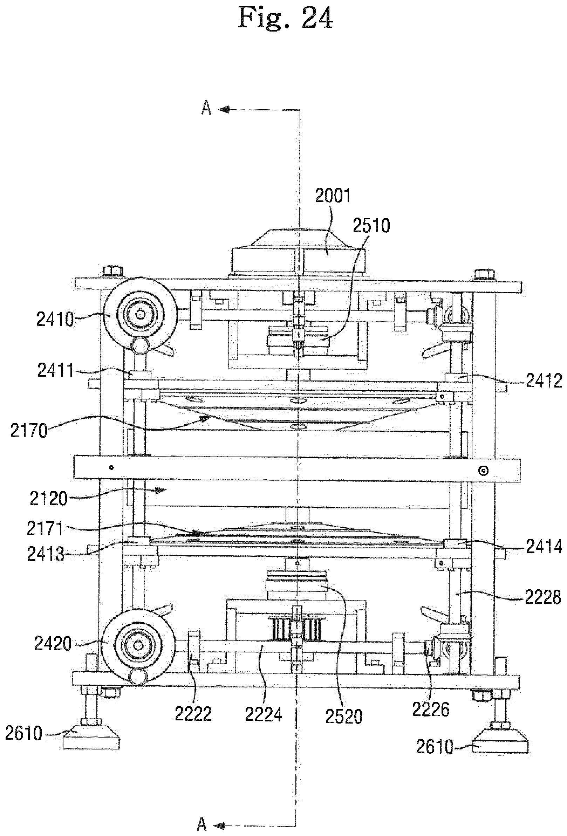

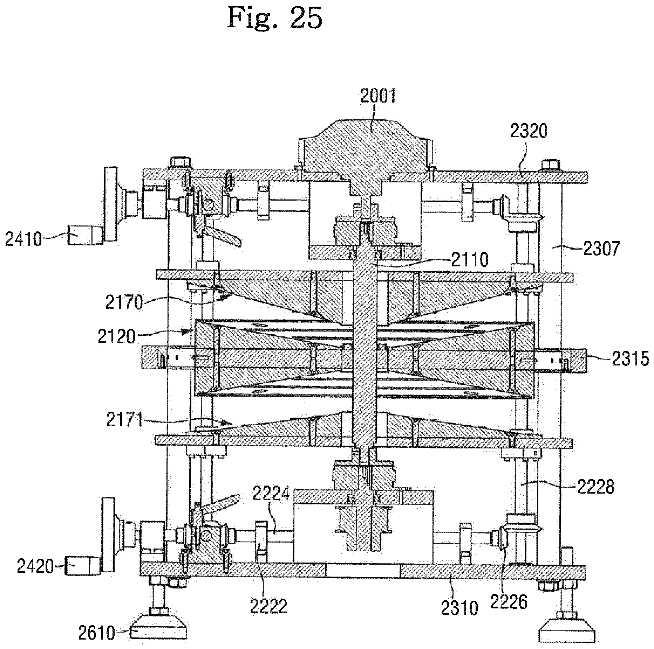

FIGS. 23 and 24 are a perspective view and a side view of the power generation apparatus according to yet another embodiment of the present disclosure, and FIG. 25 is a cross-sectional view taken along line A-A of FIG. 24.

Referring to FIGS. 23 and 24, the power generation apparatus according to yet another embodiment of the present disclosure may include a shaft 2110, a rotor 2120, a first non-rotor 2170, a second non-rotor 2171, a first handle 2410, a second handle 2420, ball screws 2411, 2412 2413, and 2414, a bearing holder 2222, bevel shafts 2224 and 2228, a bevel gear 2226, leveling feet 2610, a lower support 2310, an intermediate support 2315, an upper support 2320, clutches 2510 and 2520, a motor 2001, guide shafts 2307, and the like.

The guide shafts 2307 are arranged between the lower support 2310 and the upper support 2320. The guide shafts 2307 are arranged to separate the lower support 2310 from the upper support 2320. For example, four guide shafts 2307 may be provided, and may be arranged at corners of the lower support 2310 and corners of the upper support 2320. The leveling feet 2610 may adjust a height of the lower support 2310.

The clutch 2510 and the motor 2001 may be arranged on the upper support 2320. The motor 2001 may rotate or may not rotate by an on/off operation of the clutch 2510. A battery may be included inside the motor 2001, or may be arranged outside the motor 2001. Further, the motor 2001 may be a direct current (DC) motor, but the present disclosure is not limited thereto.

Components such as the first non-rotor 2170, the second non-rotor 2171, the rotor 2120, the shaft 2110, and the like may be arranged in a space between the lower support 2310 and the upper support 2320. The shaft 110 is connected to the motor 2001, and may rotate according to an operation of the motor 2001. As described with reference to FIGS. 1 to 22, the motor 2001 may be turned on and operated for a first period, and may be turned off for a second period after the first period. While the motor 2001 is in the off state, the rotor 2120 may be rotated by a magnetic field surfing operation.

A position of the first non-rotor 2170 (i.e., an interval between the first non-rotor 2170 and the rotor 2120) may be adjusted by rotating the first handle 2410. As mentioned above, a position of the second non-rotor 2171 (i.e., an interval between the second non-rotor 2171 and the rotor 2120) may be adjusted by rotating the second handle 2420.

For example, when the second handle 2420 is rotated, the bevel shaft 2224 is rotated and the bevel gear 2226 is rotated. The bevel shaft 2228 is also rotated through the bevel gear 2226. The ball screws 2413 and 2414 change a rotational motion of the bevel shaft 2228 to a linear motion (up and down motion) of the second non-rotor 2171.

For convenience of description, in FIGS. 23 to 25, a plurality of first magnet units 271, 272, and 275, a plurality of second magnet units 221, 222, and 225, a plurality of third magnet units 221a, 222a, and 225a, a plurality of fourth magnet units 271a, 272a, and 275a, a plurality of fifth magnet units 321, a plurality of sixth magnet units 371, a plurality of conductor units 391, and the like are not separately shown.

The plurality of first magnet units 271, 272, and 275 may be arranged on the first non-rotor 170 to form a plurality of columns, as shown in FIG. 3 or 19. The plurality of fourth magnet units 271a, 272a, and 275a may be arranged on the second non-rotor 171 to form a plurality of columns, as shown in FIG. 3 or 19.

The plurality of second magnet units 221, 222, and 225 may be arranged on a second portion 122 (e.g., an upper surface) of the rotor 2120, as shown in FIG. 7 or 21. Similarly, the plurality of second magnet units 221, 222, and 225 may be arranged on a third portion 123 (e.g., a lower surface) of the rotor 2120, as shown in FIG. 7 or 21.

The plurality of fifth magnet units 321 may be arranged on a first portion 121 (e.g., a side surface) of the rotor 2120, as shown in FIGS. 10 and 13 to 15. A groove may be formed in the intermediate support 2315, and the plurality of sixth magnet units 371 may be arranged in the groove, as shown in FIG. 11.

Meanwhile, it is possible to implement a rotating device excluding the fifth magnetic units 321, the sixth magnet units 371, and the conductor unit 391. When the fifth magnetic units 321, the sixth magnet units 371, and the conductor unit 391 are excluded, the rotating device cannot generate electricity. Therefore, the rotating device is connected to a separate generator so that the generator may generate power using the rotation of the rotating device. For example, the rotating device and the generator may be mechanically connected. For example, the rotating device and the generator may be connected by a belt or may be directly connected by a metal structure. For example, as a shaft 110 of the rotating device rotates, a pulley of the generator is rotated along therewith, and thus the generator may produce electricity. A commercialized product may be used as the generator. An example of the rotating device may be implemented to have a shape similar to the shape shown in FIGS. 23 to 25, except that the fifth magnetic units 321, the sixth magnet units 371, and the conductor unit 391 are not provided. For example, the rotating device may have a configuration similar to that of FIGS. 15 to 18 in United States Laid-open Patent Application No. US2016/0141946A1.

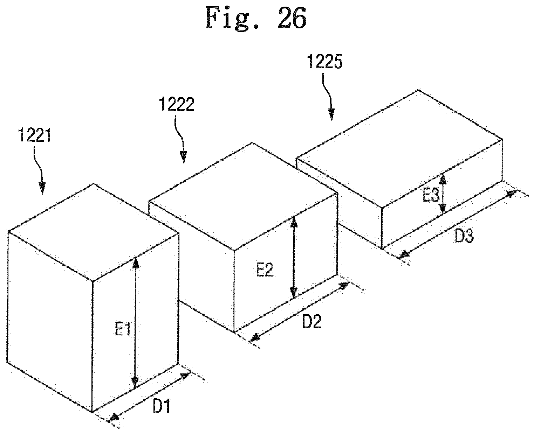

FIGS. 26 to 28 are views for describing shapes of magnetic units that may be applied to a driving system according to some embodiments of the present disclosure. The magnetic units which will be described in FIGS. 26 to 18 may be used for the rotor 120, the non-rotors 170 and 171, and the like.

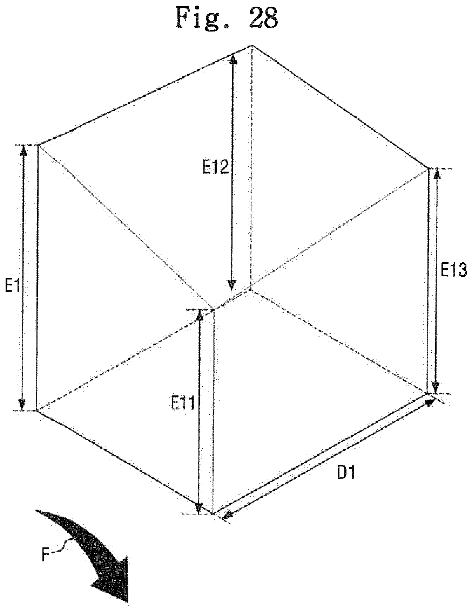

First, referring to FIG. 28, the magnetic unit may have at least two different heights among a plurality of heights E1, E11, E12, and E13.

For example, the magnetic unit may have four different heights E1, E11, E12, and E13. As shown in the drawing, E11 < E13 < E12 < E1.

Alternatively, the magnetic unit may have three different heights among the heights E1, E11, E12, and E13. For example, E11 = E13 < E12 < E1, E11 < E13 = E12 < E1, and E11 < E13 < E12 = E1.

Alternatively, the magnetic unit may have two different heights among the heights E1, E11, E12, and E13. For example, E11 = E13 < E12 = E1, and E11 < E13 = E12 < E1.

When the heights E1, E11, E12, and E13 of the magnetic unit are not constant, a direction of an upper surface of the magnetic unit having a hexahedral shape may be adjusted. Accordingly, a direction of a magnetic force emitted from the magnetic unit may be adjusted.

Further, a rotational direction F is shown to be a clockwise direction, but the present disclosure is not limited thereto.

Meanwhile, as shown in FIG. 26, magnetic units 1221, 1222, and 1225 respectively arranged in columns may have different heights E1, E2, and E3 and different widths D1, D2, and D3. Such a shape may be used for the first magnet units 271, 272, and 275 (in FIG. 3) respectively arranged in the columns L1, L2, and L3 and the second magnet units 221, 222, and 225 (in FIG. 7) respectively arranged in the columns L4, L5, and L6. For example, the heights of the magnetic units 1221, 1222, and 1225 may decrease as distances from the shaft 110 increase (i.e., E1 > E2 > E3).

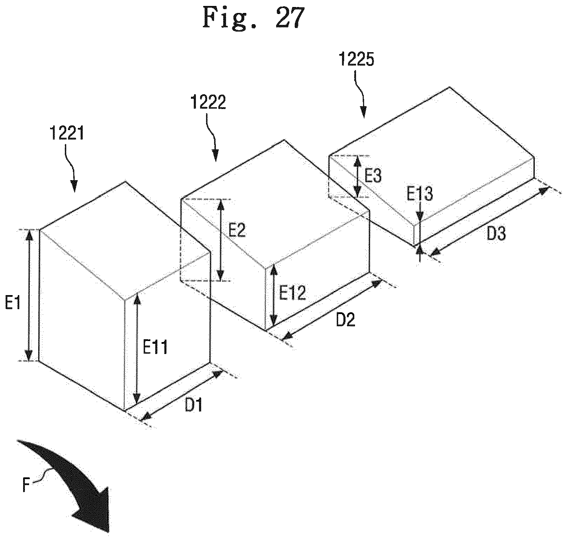

Further, as shown in FIG. 27, each of the magnetic units 1221, 1222, and 1225 respectively arranged in the columns may include at least two different heights. For example, the magnetic unit 1221 includes heights E1 and E11, the second magnet unit 1222 includes heights E2 and E12, and the second magnet unit 1225 includes heights E3 and E13. Here, E1 > E11, E2 > E12, and E3 > E13. Such a shape may be used for the first magnet units 271, 272, and 275 (in FIG. 4) respectively arranged in the columns L1, L2, and L3 and the second magnet units 221, 222, and 225 (in FIG. 8) respectively arranged in the columns L4, L5, and L6. Further, a rotational direction F is shown to be a clockwise direction, but the present disclosure is not limited thereto.

The above description of the disclosure is only exemplary, and it will be understood by those skilled in the art that various modifications can be made without departing from the scope of the present disclosure and without changing essential features. Therefore, the above-described embodiments should be considered in a descriptive sense only and not for purposes of limitation.

### [Reference Numerals]

110: SHAFT
120: ROTOR
170: FIRST NON-ROTOR
171: SECOND NON-ROTOR
271, 272, 275: FIRST MAGNET UNIT
221, 222, 225: SECOND MAGNET UNIT
221A, 222A, 225A: THIRD MAGNET UNIT
271A, 272A, 275A: FOURTH MAGNET UNIT
321: FIFTH MAGNET UNIT
371: SIXTH MAGNET UNIT
391: CONDUCTOR UNIT
190: POWER SUPPLY
199: CONTROLLER

## Claims

1. A power generation apparatus comprising:
a rotor including a first portion, a second portion arranged at one side of the first portion and having a first dent portion, and a third portion arranged at the other side of the first portion and having a second dent portion;
a supporter configured to face the first portion;
a first non-rotor configured to face the second portion and including a first protrusion configured to protrude toward the first dent portion;
a second non-rotor configured to face the third portion and including a second protrusion configured to protrude toward the second dent portion;
a plurality of first magnet units provided on the first protrusion and having a first polarity;
a plurality of second magnet units provided on the first dent portion and having the first polarity;
a plurality of third magnet units provided on the second dent portion and having a second polarity;
a plurality of fourth magnet units provided on the second protrusion and having the second polarity;
a plurality of fifth magnet units provided on the first portion and having the second polarity;
a plurality of sixth magnet units provided on the supporter and having the first polarity; and
a plurality of conductor units arranged between the first portion and the supporter and in which an induced current is generated.

2. The power generation apparatus of claim 1, wherein:
the first magnet units to the fourth magnet units have unbalanced magnetic force vector waves; and
the fifth magnet units and the sixth magnet units have balanced magnetic force vector waves.

3. The power generation apparatus of claim 2, wherein shapes of the fifth magnet units are different from shapes of the sixth magnet units.

4. The power generation apparatus of claim 3, wherein the fifth magnet units are trapezoidal and the sixth magnet units are rectangular.

5. The power generation apparatus of claim 1, further comprising a plurality of seventh magnet units provided on the first portion and having the first polarity.

6. The power generation apparatus of claim 5, wherein:
the seventh magnet units have a trapezoidal shape;
the fifth magnet units, the sixth magnet units, and the seventh magnet units have balanced magnetic force vector waves; and
the fifth magnet units and the seventh magnet units are alternately arranged.

7. The power generation apparatus of claim 1, wherein:
a groove is formed in the first portion; and
a plurality of fifth magnet units are arranged in the groove.

8. The power generation apparatus of claim 1, wherein:
a groove is formed in the supporter;
a plurality of sixth magnet units are arranged in the groove; and
a plurality of conductor units are fixed to the supporter.

9. The power generation apparatus of claim 1, wherein:
the rotor is connected to a shaft;
the first dent portion includes a first region and a second region, wherein the first region is closer to the shaft than the second region and a depth of the first region is greater than a depth of the second region; and
the second dent portion includes a third region and a fourth region, wherein the third region is closer to the shaft than the fourth region and a depth of the third region is greater than a depth of the fourth region.

10. The power generation apparatus of claim 9, wherein:
the shaft passes through the first non-rotor and the second non-rotor;
the first protrusion includes a fifth region and a sixth region, wherein the fifth region is closer to the shaft than the sixth region and a height of the fifth region is greater than a height of the sixth region; and
the second protrusion includes a seventh region and an eighth region, wherein the seventh region is closer to the shaft than the eighth region and a height of the seventh region is greater than a height of the eighth region.

11. The power generation apparatus of claim 1, wherein:
the plurality of first magnet units are arranged to form a first column and a second column about a shaft;
the plurality of second magnet units are arranged to form a third column and a fourth column about the shaft;
at least a portion of the first column and at least a portion of the third column face each other; and
at least a portion of the second column and at least a portion of the fourth column face each other.

12. The power generation apparatus of claim 11, wherein a distance from the shaft to the first column and a distance from the shaft to the third column are different from each other.

13. The power generation apparatus of claim 11, wherein the number of the plurality of first magnet units forming the second column and the number of the plurality of second magnet units forming the fourth column are different from each other.

14. The power generation apparatus of claim 13, wherein the number of the plurality of first magnet units forming the first column and the number of the plurality of second magnet units forming the third column are equal to each other.

15. The power generation apparatus of claim 14, wherein:
the plurality of first magnet units are arranged to form the first column, the second column, and the fifth column about the shaft, and arranged in an order of the first column, the second column, and the fifth column;
the plurality of second magnet units are arranged to form the third column, the fourth column, and the sixth column about the shaft, and arranged in an order of the third column, the fourth column, and the sixth column;
at least a portion of the fifth column and at least a portion of the sixth column face each other; and
the number of the plurality of first magnet units forming the fifth column and the number of the plurality of second magnet units forming the sixth column are different from each other.

16. The power generation apparatus of claim 15, wherein:
the number of the plurality of first magnet units forming the second column is smaller than the number of the plurality of second magnet units forming the fourth column; and
the number of the plurality of first magnet units forming the fifth column is greater than the number of the plurality of second magnet units forming the sixth column.

17. The power generation apparatus of claim 15, wherein the numbers of the plurality of second magnet units forming the third column, the fourth column, and the sixth column are not equal to each other, and have a greatest common divisor of 2 or higher.

18. A power generation apparatus comprising:
a rotor including a first portion, a second portion arranged at one side of the first portion, and a third portion arranged at the other side of the first portion;
a supporter configured to face the first portion;
a first non-rotor configured to face the second portion;
a plurality of first magnet units provided on the first non-rotor;
a plurality of second magnet units provided on the second portion;
a plurality of fifth magnet units provided on the first portion;
a plurality of sixth magnet units provided on the supporter; and
a plurality of conductor units arranged between the first portion and the supporter and in which an induced current is generated,
wherein a repulsive force is generated between the first magnet units and the second magnet units and an attractive force is generated between the fifth magnet units and the sixth magnet units,
the first magnet units and the second magnet units have unbalanced magnetic force vector waves,
central axes and magnetic field axes of the first magnet units have a phase difference,
central axes and magnetic field axes of the second magnet units have a phase difference, and
the fifth magnet units and the sixth magnet units have balanced magnetic force vector waves.

19. A power generation apparatus comprising:
a rotor connected to a shaft;
a first non-rotor configured to face one surface of the rotor;
a plurality of first magnet units provided on the rotor and having a first polarity; and
a plurality of second magnet units provided on the first non-rotor and having the first polarity,
wherein the plurality of first magnet units are arranged to form a first column, a second column, and a fifth column about the shaft, and arranged in an order of the first column, the second column, and the fifth column,
the plurality of second magnet units are arranged to form a third column, a fourth column, and a sixth column about the shaft, and arranged in an order of the third column, the fourth column, and the sixth column,
at least a portion of the first column and at least a portion of the third column face each other,
at least a portion of the second column and at least a portion of the fourth column face each other,
at least a portion of the fifth column and at least a portion of the sixth column face each other,
each of the first magnet units and the second magnet units has an unbalanced magnetic force vector wave,
central axes and magnetic field axes of the first magnet units have a phase difference,
central axes and magnetic field axes of the second magnet units have a phase difference, and
the numbers of the plurality of second magnet units forming the third column, the fourth column, and the sixth column are not equal to each other, and have a greatest common divisor of 2 or higher.

20. A power generation apparatus comprising:
a rotor connected to a shaft;
a first non-rotor configured to face one surface of the rotor;
a plurality of first magnet units provided on the rotor and having a first polarity; and
a plurality of second magnet units provided on the first non-rotor and having the first polarity,
wherein the plurality of first magnet units are arranged to form a first column, a second column, and a fifth column about the shaft,
the plurality of second magnet units are arranged to form a third column, a fourth column, and a sixth column about the shaft,
at least a portion of the first column and at least a portion of the third column face each other,
at least a portion of the second column and at least a portion of the fourth column face each other,
at least a portion of the fifth column and at least a portion of the sixth column face each other,
each of the first magnet units and the second magnet units has an unbalanced magnetic force vector wave,
central axes and magnetic field axes of the first magnet units have a phase difference,
central axes and magnetic field axes of the second magnet units have a phase difference,
the number of the plurality of first magnet units forming the first column and the number of the plurality of second magnet units forming the third column are equal to each other,
the number of the plurality of first magnet units forming the second column is smaller than the number of the plurality of second magnet units forming the fourth column, and
the number of the plurality of first magnet units forming the fifth column is greater than the number of the plurality of second magnet units forming the sixth column.
